# EUROPÄISCHE PATENTSCHRIFT

(11) **EP 4 063 252 B1**
(45) Veröffentlichungstag und Bekanntmachung des Hinweises auf die Patenterteilung: **28.02.2024**
(21) Anmeldenummer: 22020133.9
(22) Anmeldetag: 25.03.2022
(51) Int. Cl.: B62M 9/16, B62M 9/126, B62M 9/128

(54) **KETTENFÜHRUNGSROLLE FÜR FAHRRAD-SCHALTWERK SOWIE FAHRRAD-SCHALTWERK UND FAHRRAD-ANTRIEBSSTRANG**
CHAIN GUIDE ROLLER FOR A BICYCLE GEAR MECHANISM AND BICYCLE GEAR MECHANISM AND BICYCLE DRIVE TRAIN
ROULEAU DE GUIDE-CHAÎNE POUR DÉRAILLEURS DE BICYCLETTE, AINSI QUE DÉRAILLEUR DE BICYCLETTE ET CHAÎNE CINÉMATIQUE DE BICYCLETTE

(30) Priorität: 26.03.2021 DE 102021001592; 11.02.2022 DE 102022103284
(43) Veröffentlichungstag der Anmeldung: 28.09.2022
(73) Patentinhaber: SRAM Deutschland GmbH, 97424 Schweinfurt (DE)
(72) Erfinder: Heyna, Sebastian, DE-97456 Dittelbrunn-OT Hambach (DE)

(56) Entgegenhaltungen:
- DE-A1- 2 521 642
- JP-B2- 2 904 823
- US-A1- 2014 371 013

## Beschreibung

Die vorliegende Erfindung betrifft eine Kettenführungsrolle für ein hinteres Fahrrad-Schaltwerk nach dem Oberbegriff von Anspruch 1, ferner ein Fahrrad-Schaltwerk nach dem Oberbegriff von Anspruch 11 sowie einen Fahrrad-Antriebsstrang nach dem Oberbegriff von Anspruch 12.

In der nachfolgenden Beschreibung verwendete Orts- bzw. Richtungsangaben wie "links", "rechts", "vorne", "hinten", "oben", "unten" usw. entsprechen der Fahrerperspektive auf einem Fahrrad. Entsprechendes gilt für die in der Beschreibung verwendeten branchenüblichen Richtungsangaben "Inboard" (links bzw. nach links bzw. in Richtung zu einem größeren Ritzel einer Ritzelkassette) und "Outboard" (rechts bzw. nach rechts bzw. in Richtung zu einem kleineren Ritzel einer Ritzelkassette), welche sich spezifisch auf Schaltvorgänge bzw. Ritzelpositionen an der Ritzelkassette beziehen.

Fahrrad-Ritzelkassetten umfassen eine Mehrzahl an hinterachs-axial beabstandeten Ritzeln mit gestuft unterschiedlicher Zähnezahl. Die Fahrradkette wird je nach der vom Fahrer gewählten Übersetzung mittels eines Schaltwerks auf eines der Ritzel gelegt, und bestimmt somit im Zusammenwirken mit der Zähnezahl eines Kettenblatts am Tretlager die Übersetzung und die vom Fahrer gewünschte Trittfrequenz.

In den letzten Jahren ist die Fahrradbranche vor allem im Bereich der Mountainbikes dazu übergegangen, die Anzahl der Tretlager-Kettenblätter von traditionell drei unterschiedlich großen Kettenblättern zunächst auf zwei, und zwischenzeitlich auf zumeist nur noch ein einziges Kettenblatt zu reduzieren, zumindest im gehobenen Marktsegment. Dies vereinfacht den Antriebsstrang und erhöht dessen Zuverlässigkeit. Auch wird hierdurch für den Fahrer die auf nur noch einen Schalthebel reduzierte Schaltbetätigung und Schaltlogik vereinfacht.

Weiterhin entfallen damit auch der vordere Kettenwerfer im Bereich des Tretlagers ebenso wie dessen Ansteuerung und die zu deren Befestigung notwendigen Einrichtungen am Fahrradrahmen und Fahrradlenker. Mit dem Entfall von Kettenwerfer, zusätzlichen Kettenblättern sowie Schalthebel und Zubehör ist auch eine nennenswerte Gewichtsreduzierung des Fahrrads verbunden.

Auch bei Fahrrädern mit elektrischem Zusatzantrieb wird u.a. aus Baumraumgründen sowie zur Vereinfachung des Antriebsstrangs in den meisten Fällen auf mehrere schaltbare Kettenblätter verzichtet.

Mit dem Entfall desjenigen Teilfaktors des Übersetzungsbereichs am Fahrrad, welcher zuvor durch mehrere Kettenblätter am Tretlager bereitgestellt wurde, und der typischerweise im Bereich von 180 bis 200 % lag, wurde es erforderlich, den von der Ritzelkassette bereitgestellten Übersetzungsbereich wesentlich zu vergrößern.

Diese Notwendigkeit hat zur Entwicklung von Ritzelkassetten geführt, die sowohl outboardseitig sehr kleine Ritzel bis herab zu 11 Zähnen und weniger, als auch inboardseitig sehr große Ritzel bis hinauf zu 50 Zähnen und mehr aufweisen. Damit kommen diese Kassetten auf Übersetzungsbereiche in der Größenordnung von 500 %, und stellen somit in nahezu allen Fahrsituationen eine geeignete Übersetzung bereit.

Unter anderem, um Bedienkräfte beim Schalten zwischen den verschiedenen Übersetzungsstufen der Kassette gering zu halten, werden in Kombination mit derartigen Kassetten vornehmlich Schaltwerke mit nicht geneigtem oder mit nur wenig geneigtem Schaltparallelogramm verbaut. Derartige Schaltwerke sind beispielsweise aus den Druckschriften EP2641823B1 oder EP3388324A3 bekannt, und werden in der Branche auch als sog. Straight-Pin-Schaltwerke bezeichnet. Der Ausdruck "nicht oder wenig geneigtes Schaltparallelogramm" bedeutet im Sinne der vorliegenden Offenbarung sowie der vorstehend genannten Druckschriften aus dem Stand der Technik, dass die Achsen des Schaltparallelogramms parallel oder nur geringfügig geneigt relativ zu einer Längsmittelebene des Fahrrads angeordnet sind, wenn das Schaltwerk betriebsbereit am Fahrrad montiert ist. Insbesondere erfolgt bei einem "nicht oder nur wenig geneigten Schaltparallelogramm" die vertikale Nachführung der Kettenführungsrolle des Schaltwerks entlang der Zahnspitzenkontur der Ritzelkassette beim Gangwechsel vorwiegend durch die Schwenkbewegung des Kettenkäfigs und damit durch die Schwenkbewegung der oberen Kettenführungsrolle, und nicht vorwiegend durch die Neigung des Parallelogramms, wie dies bei Schaltwerken mit Schrägparallelogramm der Fall ist.

JP2904823B2 offenbart die Merkmale der Präambel des Anspruchs 1.

Bei derartigen Schaltwerken bewegt sich das Schaltparallelogramm des Schaltwerks somit in einer Ebene, welche keine oder nur eine geringfügige Neigungskomponente um eine gedachte, in Fahrtrichtung verlaufende Gerade aufweist. Damit unterscheiden sich derartige Schaltwerke maßgeblich von der zuvor jahrzehntelang verwendeten Bauweise mit stark geneigtem Schaltparallelogramm, welches durch seine Neigung bei den Schaltvorgängen die Kontur der Ritzelkassette näherungsweise nachfährt.

Die obere Kettenführungsrolle ist bei derartigen Schaltwerken mit nicht oder nur geringfügig geneigtem Schaltparallelogramm mit erheblichem Abstand zur P-Achse (Schwenkachse des Kettenkäfigs gegenüber dem beweglichen Schaltungselement bzw. P-Knuckle) angebracht, vgl. z.B. Fig. 3 der EP3388324A3 oder Fig. 3 bis 7 der EP2641823B1.

Obere und untere Kettenführungsrolle sind bei Fahrradschaltwerken üblicherweise zwischen zwei Leitblechen einer Schaltwerkskäfiganordnung aufgenommen, in der Branche und in der nachfolgenden Beschreibung auch vereinfacht und synonym bezeichnet als Kettenkäfiganordnung oder Kettenkäfig.

Die Schaltwerksrollen dienen dabei zunächst einmal zur Führung der Kette im Bereich der Ritzelkassette am Hinterrad des Fahrrads, sowie zur Aufrechterhaltung der Kettenspannung und der Aufnahme der je nach eingelegtem Gang überschüssigen Kettenlänge.

Der Kettenkäfig ist üblicherweise um eine Schwenkachse relativ zum sog. P-Knuckle des Schaltwerks federbelastet schwenkbar, und sorgt so für die Aufrechterhaltung der erforderlichen Kettenspannung.

Die untere Kettenrolle, oft auch bezeichnet als Kettenspannrolle, übernimmt dabei die Aufgabe, die überschüssige Kettenlänge aufzunehmen, sowie die Aufgabe der unter allen Betriebsbedingungen möglichst sicheren Einleitung des Leertrums der Kette in das Schaltwerk.

Die obere Kettenrolle, häufig auch bezeichnet als Kettenführungsrolle, übernimmt die Aufgabe der insbesondere seitlichen Führung des auf die Ritzelkassette auflaufenden Leertrums der Kette, sowie die Durchführung der Gangwechsel zwischen den verschiedenen Ritzeln der Ritzelkassette, wenn diese vom Fahrer über einen Schalthebel oder ein entsprechendes Betätigungselement angewählt werden.

Durch den großen Übersetzungsbereich bzw. die große Gangspreizung der eingangs beschriebenen Ritzelkassetten, aufgrund der unter anderem durch den axial eingeschränkten Bauraum begrenzten Anzahl der Gänge (in der Regel 10 bis 13) und aufgrund der damit verbundenen Auswahl an prozentualen Gangsprüngen zwischen benachbarten Ritzeln ergeben sich bei derartigen Kassetten teilweise größere Gangsprünge als bei Mehrfachantrieben üblich, also bei Antriebssträngen mit mehr als einem Kettenrad im Tretlagerbereich und daher zumeist mit kleinerem Übersetzungsbereich der Kassette.

Aus der Kombination der großen Gangsprünge und des (bei Schaltwerken mit nicht oder wenig geneigtem Schrägparallelogramm üblichen) erheblichen Abstands zwischen P-Achse und Kettenführungsrolle ergibt sich die geometrische Randbedingung, dass der in der Branche bekannte sog. Chain-Gap, also der Abstand zwischen der oberen Kettenführungsrolle und dem mit der Kette in Eingriff befindlichen Ritzel der Ritzelkassette, bei einem Inboard-Schaltvorgang wesentlich kleiner ist als der Chain-Gap bei einem Outboard-Schaltvorgang bzw. als der Chain-Gap beim normalen Betriebslauf der Kette.

Die Ursache dafür ist, dass bei den meisten Fahrrad-Schaltwerken, und in besonders großem Maße bei den vorgenannten Schaltwerken mit nicht oder nur wenig geneigtem Schaltparallelogramm der Kettenkäfig beim Inboard-Schaltvorgang erst dann geschwenkt wird, und somit das Nachführen der oberen Kettenführungsrolle entlang der kegelformähnlichen Zahnspitzenkontur der Ritzelkassette erst dann beginnt, wenn die Kette bereits in das größere Ritzel eingreift. Das vollständige Schwenken des Kettenkäfigs und damit die gewünschte Nachführung der oberen Kettenführungsrolle und die Herstellung des gewünschten Chain Gaps zwischen der oberen Kettenführungsrolle und dem größeren Ziel-Ritzel des Schaltvorgangs ist bei derartigen Schaltwerken sogar erst dann beendet, wenn die Kette das kleinere Ritzel verlassen hat und vollständig auf dem größeren Ritzel läuft.

Bei den vorgenannten Schaltwerken mit nicht oder nur wenig geneigtem Schaltparallelogramm vergrößert beim Inboard-Schaltvorgang somit erst das Schwenken des Kettenkäfigs den Chain-Gap, also den Abstand zwischen oberer Kettenführungsrolle und größerem Zielritzel. Da bei derartigen Schaltwerken der Kettenkäfig einschließlich der oberen Kettenführungsrolle jedoch bereits vor Beginn des Schwenkens des Kettenkäfigs, und damit vor der gewünschten Anpassung des Chain-Gap, im Wesentlichen horizontal nach Inboard verschoben wird, drückt die obere Kettenführungsrolle bei derartigen Schaltwerken die Kette zu Beginn des Inboard-Schaltvorgangs mit nur geringem radialem Abstand, also Chain-Gap, gegen das größere Ritzel.

Insbesondere ist bei aktuellen, durchweg sog. indizierten Fahrradschaltungen, bei denen der Verfahrweg des Kettenkäfigs und damit der oberen Kettenführungsrolle in Axialrichtung der Ritzelkassette schrittweise entsprechend der Abstände der Ritzel der Ritzelkassette erfolgt, dieser axiale Verfahrweg pro geschaltetem Gang stets im Wesentlichen konstant und entspricht damit stets im Wesentlichen einem mit den Ritzelabständen übereinstimmenden Absolutmaß.

Wie vorstehend beschrieben, fällt der Chain-Gap, und damit der zwischen der Kettenführungsrolle und dem größeren Ritzel überlaufende freie Kettenabschnitt beim Inboard-Schalten relativ kurz aus, wodurch sich aufgrund trigonometrischer Verhältnisse durch das konstante Absolutmaß der axialen Auslenkung des Schaltwerks nach Inboard ein wünschenswert verhältnismäßig großer Schräglaufwinkel des überlaufenden Kettenabschnitts ergibt, um die Kette korrekt auf das größere Ritzel überzuleiten, und um Fehlschaltungen zu vermeiden.

Tatsächlich ist die Kettenführungseigenschaft und damit der Schräglaufwinkel bei aus dem Stand der Technik bekannten oberen Kettenführungsrollen jedoch auf beiden axialen Seiten der Kettenführungsrolle gleich, wodurch der Schräglaufwinkel beim Inboard-Schalten mit Kettenführungsrollen gemäß dem Stand der Technik verhältnismäßig klein ausfällt.

Daher kommt es bei diesen bekannten Kettenführungsrollen, unter der vorbeschriebenen Voraussetzung des konstanten Absolutmaßes der axialen Schaltwerksauslenkung pro geschaltetem Gang, und bei dem bei diesen Rollen relativ kleinen Ketten-Schräglaufwinkel auch beim InboardSchalten, regelmäßig zum verfrühten Schalten auf das größere Ritzel, da die Kette beim Schaltvorgang früher bzw. stärker an den Zähnen des grö-ßeren Ritzels reibt und damit zum verfrühten Aufstieg auf das größere Ritzel neigt.

An den Ritzeln von Mehrfach-Ritzelkassetten befinden sich üblicherweise speziell gestaltete sog. Schaltgassen mit Ausnehmungen sowie mit speziellen Aufstiegszähnen, an denen die Kette vom kleineren auf das größere Ritzel entlang eines exakt definierten, insbesondere näherungsweise tangential zwischen den beiden Ritzeln verlaufenden Weges aufsteigen soll. Um Schaltfehler zu verhindern, muss die Kette damit jedoch an allen anderen Zähnen des größeren Ritzels seitlich entlang gleitend abgewiesen werden solange, bis die Kette einen der Aufstiegszähne des größeren Ritzels erreicht.

Das Abweisen der Kette an nicht zum Hochschalten vorgesehenen Zähnen des größeren Ritzels beim Inboardschalten ist jedoch umso schwieriger, je größer der Gangsprung zwischen den Ritzeln ist, je kleiner der Chain-Gap und damit die Länge des überlaufenden Kettenabschnitts bei Schaltbeginn ist, und je mehr Zähne sich zwischen den entlang des Umfangs des größeren Ritzels verteilten Aufstiegszähnen des größeren Ritzels befinden.

Eine besondere Herausforderung hinsichtlich des Abweisens der Kette tritt dann auf, wenn sich, insbesondere bei Ritzelkassetten mit Dick-Dünn-Zähnen, in der Branche auch als X-Sync-Ritzel bekannt, die Kette auf einem ungeradzahligen sog. Übergangsritzel befindet und von dort in einer definierten Ausrichtung synchronisiert auf das nächstgrößere, geradzahlige und Dick-Dünn-Zähne aufweisende Ritzel geschaltet werden muss dergestalt, dass die dünnen Zähne des größeren Ritzels in Innenlaschen-Kettenglieder und die dicken Zähne des größeren Ritzels in Außenlaschen-Kettenglieder eingreifen. Eine derartige Schaltsituation ist beispielsweise aus Absatz [0085] i.V.m. Fig. 5 der DE102015016767A1 bekannt.

Ausgehend von dem ungeradzahligen Übergangsritzel sowie je nach Ritzelgröße stehen in einem solchen Fall pro Umdrehung der Ritzelkassette unter Umständen nur zwei oder in manchen Fällen sogar nur eine passende Drehwinkelposition der Kassette zur Verfügung, an denen bzw. an der ein Aufstiegszahn auf eine Außenlasche der Kette trifft. Denn ein Aufstieg der Kette auf ein geradzahliges Dick-Dünn-Ritzel ist nur an einem Außenlaschenglied erwünscht, damit die Kette nicht desynchronisiert, also mit den Ketteninnenlaschen auf den dicken Zähnen aufreitend, auf das größere Ritzel aufläuft.

Selbst wenn in einem solchen Fall das größere Ritzel eine Mehrzahl an Inboard-Schaltgassen mit jeweils zugehörigem Aufstiegszahn umfasst, welche aufgrund der abwechselnd dicken und dünnen Zähne einen grundsätzlich geradzahligen Zähneabstand voneinander aufweisen, kann die Kette, ausgehend von einem ungeradzahligen Übergangsritzel, bestenfalls nur an jedem zweiten Aufstiegszahn auf das geradzahlige größere Ritzel aufsteigen, da die auf dem ungeradzahligen Übergangsritzel laufende Kette nur bei jedem zweiten Aufstiegszahn auch mit einem Außenlaschenglied auf den Aufstiegszahn trifft.

Die Kette muss in solchen und ähnlichen Fällen somit an einer besonders großen Anzahl von Zähnen des größeren Ritzels abgewiesen werden, unter Umständen sogar während einer nahezu gesamten Umdrehung der Ritzelkassette, um nicht an unerwünschter Position auf das größere Ritzel aufzusteigen, was zu unsauberen Schaltvorgängen, erhöhter Belastung des Antriebsstrangs und unerwünschter Geräuschentwicklung bis hin zum Durchrutschen der Kette auf der Ritzelkassette und damit zur Beeinträchtigung der Fahrsicherheit führen kann.

Insgesamt ist demzufolge, insbesondere bei den eingangs beschriebenen Schaltwerken mit nicht oder nur wenig geneigtem Schaltparallelogramm, und noch mehr bei der Kombination solcher Schaltwerke mit Ritzelkassetten mit Dick-Dünn-Zähnen, beim Inboard-Schaltvorgang ein erhöhter Schräglauf der Kette und hierzu somit eine relativ schwache axiale Kettenführungseigenschaft des Kettenkäfigs bzw. der oberen Kettenführungsrolle wünschenswert, damit die Kette nicht an einem nicht dafür vorgesehenen Zahn auf das nächstgrößere Ritzel aufsteigt, sondern stattdessen an allen nicht zum Aufstieg vorgesehenen Zähnen möglichst wirksam abgewiesen wird.

Bei Outboard-Schaltvorgängen ergibt sich bei derartigen Schaltwerken, umgekehrt analog zu den obigen Erläuterungen zum Inboard-Schaltvorgang, beim Schaltbeginn ein deutlich größerer Chain-Gap, also Abstand zwischen der oberen Kettenführungsrolle und dem zu verlassenden größeren Ritzel, als dies bei herkömmlichen Schaltwerken mit Schrägparallelogramm der Fall ist.

Wieder hängt dies damit zusammen, dass bei den o.g. Schaltwerken mit nicht oder nur wenig geneigtem Schaltparallelogramm das Nachführen der oberen Kettenführungsrolle entlang der kegelformähnlichen Zahnspitzenkontur der Ritzelkassette, und somit die Nachführung des korrekten Chain Gap zwischen Kettenführungsrolle und Ritzelkassette, nicht bereits mit der seitlichen Schaltbewegungen des Schaltwerks beginnt, sondern erst nach Eingriff der Kette in das Ziel-Ritzel, hier also nach dem Eingriff in das kleinere Ritzel, aufgrund der dann allmählich freiwerdenden Kettenlänge, welche zu einer Verschwenkung der Kettenkäfig-Baugruppe von Outboard gesehen im Uhrzeigersinn führt. Erst diese Verschwenkung des Kettenkäfigs aufgrund der mit zunehmendem Eingriff der Kette in das kleinere Ritzel freiwerdenden Kettenlänge führt schließlich zur Wiederherstellung des gewünschten Chain Gap, indem die obere Kettenführungsrolle der Zahnspitzenkontur der Kassette folgt und sich somit in Radialrichtung der Kassette wieder annähert.

Aufgrund dieses bei der Einleitung des Outboard-Schaltvorgangs noch verhältnismäßig großen Chain Gaps und der damit verhältnismäßig gro-ßen Länge des zwischen der oberen Kettenführungsrolle und dem zu verlassenden, größeren Ritzel überlaufenden freien Kettenabschnitts, und aufgrund der sich, zusammen mit dem vorbeschriebenen konstanten Absolutmaß der axialen Auslenkung des Schaltwerks, damit ergebenden trigonometrischen Verhältnisse sollte die Kette beim Outboard-Schaltvorgang somit einen relativ kleinen Schräglaufwinkel erhalten, um im Bereich der Ritzelzähne des größeren Ritzels seitlich genügend ausgelenkt zu werden, damit die Kette von einem der speziell gestalteten Abstiegszähne des größeren Ritzels erfasst, wie vorgesehen seitlich in Richtung Outboard abgewiesen, und damit an der vorgesehenen Schaltposition auf das kleinere Ritzel geleitet werden kann.

Die korrekte Verlagerung des überlaufenden Kettenabschnitts beim Outboard-Schalten wird aufgrund des beim Outboard-Schalten großen Chain-Gaps und des damit relativ langen überlaufenden Kettenabschnitts somit von einer relativ starken axialen Kettenführungseigenschaft der Kettenführungsrolle begünstigt, bei der mit anderen Worten die axiale Verschiebung der Kettenführungsrolle um das oben beschriebene Absolutmaß durch das Schaltwerk möglichst direkt auf den zwischen Kettenführungsrolle und Ritzelkassette überlaufenden Kettenabschnitt übertragen wird.

Ist dies nicht der Fall, und ist damit der Schräglaufwinkel des überlaufenden Kettenabschnitts beim Outboard-Schalten zu groß, so kann es zu Schaltfehlern oder zu verzögerten Schaltvorgängen kommen, da die Kette dann nicht wie vorgesehen an einem der speziellen Abstiegszähne des größeren Ritzels seitlich Richtung Outboard abgewiesen und damit auf das kleinere Ritzel geleitet wird.

In der Branche als sog. X-Sync-Kettenführungsrollen bekannte Kettenführungsrollen mit abwechselnd dicken und dünnen Zähnen zum Eingriff in die Kettenaußenlaschenglieder bzw. Ketteninnenlaschenglieder besitzen prinzipiell eine solche gute axiale Kettenführungseigenschaft, und können die Kette aufgrund der damit verbundenen axialen Führung sowohl der Ketteninnenlaschen als auch der Kettenaußenlaschen axial exakter definiert und entlang ihrer Umdrehungsrichtung gleichmäßiger auslenken. Bei den aus dem Stand der Technik bekannten X-Sync-Kettenführungsrollen, deren Verzahnung üblicherweise spiegelsymmetrisch zu einer Mittelebene der Kettenführungsrolle ist, ist diese axiale Kettenführungseigenschaft jedoch beim Outboard-Schalten gleich groß bzw. gleich stark wie beim Inboard-Schalten.

Durch die vorstehend beschriebenen, bei gattungsgemäßen Kettenrollen gemäß dem Stand der Technik gegebenen Zusammenhänge ergibt sich demzufolge ein Zielkonflikt: Beim Inboard-Schalten ist eine schwächere seitliche Kettenführungseigenschaft der oberen Kettenführungsrolle (in Kettenrollen-Axialrichtung) erwünscht, beim Outboard-Schalten jedoch eine stärkere Kettenführungseigenschaft.

Hinzu kommen noch weitere Herausforderungen. Bei aus dem Stand der Technik bekannten X-Sync Kettenführungsrollen mit abwechselnd dicken und dünnen Zähnen kann es, z.B. beim Einfedern des Hinterrads am Fahrrad, zu einem Abheben der Kette von der Kettenführungsrolle und zur Desynchronisation zwischen der Kette und der Zahngeometrie der Kettenführungsrolle kommen, bei der die dicken Zähne der Kettenführungsrolle nicht mehr in die Kettenaußenlaschenglieder eingreifen, womit die Kette auf den Zahnspitzen der Kettenführungsrolle aufreitet.

Dies macht sich durch einen rauen Lauf der Kette und entsprechende Geräusche bemerkbar. In vielen Fällen ist es danach notwendig, in einen bestimmten Gang zu schalten und rückwärts zu treten, um die Kette zum Überspringen eines Zahns auf der Kettenführungsrolle, also zum Zurückspringen in die synchronisierte Stellung zu bringen.

Weiterhin bestehen Zielkonflikte zwischen den optimalen Werten für den Chain-Gap beim Inboard-Schalten und beim Outboard-Schalten sowie hinsichtlich des wünschenswert möglichst großer Umschlingungswinkels der Kette an der Kettenführungsrolle und am Ritzel und der damit eigentlich wünschenswerten Vorwärtspositionierung des Schaltwerks, gegenüber dem stets begrenzten Bauraum am Hinterbau. Dieser Bauraum, der im Bereich des Ausfallendes am Hinterbau des Fahrradrahmens für das Schaltwerk genutzt werden kann, wird von Rahmenbauteilen insbesondere im Bereich der Kettenstrebe eingeschränkt.

Das führt dazu, dass die Ausrichtung des Schaltwerks, die Verschwenkung des Kettenkäfigs und dessen Länge, sowie schließlich die Umschlingung der Kette um die obere Kettenführungsrolle mit Kompromissen behaftet und nicht gänzlich bzw. ausschließlich im Sinne der besten Führung der Kette durch die Kettenführungsrolle optimiert werden können

Konkret wird für einen guten Kompromiss aus Schaltwerkskapazität, Hinterbau-Bauraum und Kettenumschlingung von Kassette und Kettenführungsrolle das Schaltwerk üblicherweise von Outboard gesehen im Uhrzeigersinn weiter nach hinten verdreht angeordnet, als dies ohne Berücksichtigung des Rahmenbauraums der Fall wäre. Das führt in der Praxis zu einem reduzierten Umschlingungswinkel um die Kettenführungsrolle, was insbesondere beim Outboard-Schaltvorgang in einer nicht optimalen Führung der Kette durch die Kettenführungsrolle resultiert, insbesondere beim Schalten im Bereich der größten Ritzel, bei denen der Kettenkäfig stark im Gegenuhrzeigersinn geschwenkt ist, wodurch die Umschlingung der Kettenführungsrolle noch weiter reduziert wird, vgl. z.B. Fig. 3 der EP2641823B1.

Diese beim Stand der Technik vorhandenen Zielkonflikte können insbesondere beim Outboard-Schalten zu einem verzögerten Schaltverhalten und zu Schaltfehlern führen. Auch erschwert der vorstehend beschriebene geringere Umschlingungswinkel der Kette auf der oberen Kettenführungsrolle die Resynchronisation der Kette, falls diese desynchronisiert auf der Kettenführungsrolle laufen sollte.

Die vorgenannten Aspekte und Zielkonflikte führen dazu, dass mit Kettenführungsrollen nach dem Stand der Technik der sinnvoll nutzbare Bereich für den Chain-Gap deutlich eingeschränkt ist, bzw. allgemein dazu, dass Konflikte zwischen den geometrischen Optimierungen am Schaltwerk für das Inboard-Schalten und für das Outboard-Schalten entstehen.

Ausgehend von dem vorstehend beschriebenen Stand der Technik ist es damit die Aufgabe der vorliegenden Erfindung, eine Kettenführungsrolle, ein Fahrradschaltwerk sowie einen Fahrrad-Antriebsstrang bereitzustellen, mit denen die beschriebenen Nachteile und Zielkonflikte überwunden werden.

Diese Aufgabe wird durch eine Kettenführungsrolle mit den Merkmalen des Patentanspruchs 1, durch ein Fahrradschaltwerk mit den Merkmalen von Patentanspruch 11, bzw. durch einen Fahrrad-Antriebsstrang mit den Merkmalen von Patentanspruch 12 gelöst. Bevorzugte Ausführungsformen sind Gegenstand der Unteransprüche.

Gattungsgemäß umfasst die Kettenführungsrolle zunächst einen um eine gedachte Rotationsachse rotierbaren Lagerbereich zur Aufnahme einer Lageranordnung, beispielsweise eines Kugellagers, weiterhin einen Zahnbereich mit daran ausgebildeten Zähnen zum Eingriff in eine Fahrradkette, sowie eine den Lagerbereich und den Zahnbereich verbindende Tragstruktur.

Dabei sind an zumindest einem Zahn der Kettenführungsrolle, vorzugsweise an mehreren bzw. allen Zähnen, an der inboardseitigen und an der outboardseitigen Seitenfläche des zumindest einen Zahns jeweils Führungsbereiche zur seitlichen Führung der Kette entlang einer zur Axialrichtung der Rotationsachse parallelen Richtung ausgebildet.

Erfindungsgemäß zeichnet sich die Kettenführungsrolle dadurch aus, dass zumindest ein inboardseitiger Führungsbereich des zumindest einen Zahns gegenüber zumindest einem outboardseitigen Führungsbereich des zumindest einen Zahns eine zumindest bereichsweise reduzierte Dickenabmessung relativ zu einer Mittelebene der Kettenführungsrolle aufweist. Die zumindest bereichsweise reduzierte Dickenabmessung des inboardseitigen Führungsbereich ist dergestalt ausgebildet bzw. führt dazu, dass ein von der Kettenführungsrolle im Wesentlichen tangential ablaufender und beispielsweise zu einem Ritzel einer Mehrfach-Ritzelanordnung überlaufender Kettenabschnitt, beispielsweise bei einem Schaltvorgang der Kette auf der Ritzelanordnung, von der Kettenführungsrolle aus betrachtet in Outboardrichtung (also beim Inboard-Schalten) einen größeren Schräglaufwinkel einnehmen kann als in Inboardrichtung (also beim Outboard-Schalten).

Die zumindest bereichsweise reduzierte Dickenabmessung des inboardseitigen Führungsbereichs gegenüber dem outboardseitigen Führungsbereich des zumindest einen Zahns führt demzufolge dazu, dass die seitliche Kettenführungseigenschaft der Kettenrolle, also in Axialrichtung der Kettenrolle, beim Inboard-Schaltvorgang geringer ausfällt als beim Outboard-Schaltvorgang.

Es bleiben also die gewünschten starken axialen Kettenführungseigenschaften der Kettenführungsrolle für den Outboard-Schaltvorgang erhalten, während die Kettenführungseigenschaften für den Inboard-Schaltvorgang reduziert sind.

Die Dickenreduzierung des inboardseitigen Zahn-Führungsbereichs gegenüber dem outboardseitigen Führungsbereich führt mit anderen Worten dazu, dass das Absolutmaß der axialen Auslenkung des überlaufenden Kettenabschnitts im Bereich der Ritzelzähne beim Inboard-Schalten demjenigen beim Outboard-Schalten angeglichen wird und somit gleichmäßiger ausfällt.

Vorzugsweise umfasst zumindest einer der Führungsbereiche des zumindest einen Zahns eine über eine stirnseitige Ebene bzw. Seitenfläche des Zahnbereichs der Kettenführungsrolle in Kettenrollen-axialer Richtung herausragende, erhabene Verdickung. Die Verdickung ist somit im Zahnbereich der Kettenführungsrolle an einer inboardseitigen oder an einer outboardseitigen Seitenfläche des zumindest einen Zahns angeordnet.

Durch den als erhabene Verdickung ausgebildeten Führungsbereich lassen sich die axialen Führungseigenschaften des Führungsbereichs in der gewünschten Weise an die jeweilige Innenbreite der Ketteninnenlaschenglieder bzw. Kettenaußenlaschenglieder anpassen.

Vorzugsweise weist das zumindest eine Führungselement des zumindest einen Zahns zumindest bereichsweise eine mit zunehmendem Abstand von der Rotationsachse abnehmende Dicke auf. Auf diese Weise lässt sich ein gleichmäßiges, allmähliches und vibrationsarmes Ablaufen des überlaufenden Kettenabschnitts von der Kettenführungsrolle gewährleisten, insbesondere während eines Schaltvorgangs unter entsprechendem Schräglauf der Kette. Außerdem wird hierdurch verhindert, dass die Kette beim Rückwärtstreten unerwünscht auf den Zahnspitzen der Kettenführungsrolle aufreitet.

Bevorzugt ist dabei ein Bereich abnehmende Dicke des zumindest einen Führungselements des zumindest einen Zahns als Fasenfläche ausgebildet. Durch die Fasenfläche ist eine Fasen-Ebene definiert, die relativ zu einer Kettenführungsrollen-Mittelebene entlang einer Axialrichtung der Kettenführungsrolle verkippt angeordnet ist dergestalt, dass durch die Verkippung eine radial innere Begrenzungskante der Fasenfläche mit einer Zahnbereichs-Fläche der Kettenrolle bzw. mit einer Seitenfläche des zumindest einen Zahns definiert ist.

Besonders bevorzugt ist die Fasen-Ebene damit die Fasenfläche des zumindest einen Zahns zusätzlich zu der vorgenannten Verkippung entlang der Axialrichtung um eine dem zumindest einen Zahn zugeordnete Kettenrollen-Radiallinie gegenüber der Kettenrollen-Mittelebene verschwenkt dergestalt, dass die radial innere Begrenzungskante der Fasenfläche einen entlang einer Betriebsdrehrichtung der Kettenführungsrolle nach radial außen ansteigenden Verlauf erhält.

Zusätzlich oder alternativ hierzu kann diese Verschwenkung der Fasen-Ebene so ausgeführt sein bzw. dazu führen, dass das Führungselement des zumindest einen Zahns zumindest im Bereich der Fasenfläche eine von der Lastflanke des Zahns hin zu dessen Nichtlastflanke zunehmende Dicke, also eine in Betriebsdrehrichtung der Kettenführungsrolle zunehmende Dicke aufweist.

Die in Betriebsdrehrichtung der Kettenführungsrolle nach radial außen ansteigende innere Begrenzungskante der Fasenfläche bzw. die von der Lastflanke des Zahns hin zu dessen Nichtlastflanke, also in Betriebsdrehrichtung zunehmende Dicke des Zahn-Führungsbereichs ermöglicht einerseits ein gleichmäßiges, allmähliches Ablaufen des überlaufenden Kettenabschnitts von der Kettenführungsrolle, insbesondere während eines Schaltvorgangs unter entsprechendem Schräglauf der Kette, und verhindert außerdem, dass die Kette beim Rückwärtstreten unerwünscht auf den Zahnspitzen der Kettenführungsrolle aufreitet. Andererseits ermöglicht diese Gestaltung die erwünschte starke Führung der Kette in Kettenrollen-axialer Richtung, solange die Kette nicht von der Kettenrolle abläuft, sondern auf der Kettenrolle laufend von dieser geführt wird.

Mit anderen Worten wird es hierdurch möglich, dass die Zähne der Kettenrolle für den im Wesentlichen tangential zur Ritzelkassette überlaufenden Kettenabschnitt eine geringere axiale Führungseigenschaft, insbesondere eine auf der Inboardseite gegenüber der Outboardseite weiter deutlich verringerte Führungseigenschaft aufweisen, jedoch für den auf der Kettenrolle laufenden Kettenabschnitt eine nicht verringerte, starke axiale Führungseigenschaft sowohl auf der Inboardseite als auch auf der Outboardseite aufweisen.

Eine weitere bevorzugte Ausführungsformen sieht vor, dass ein Flankenwinkel der Lastflanke des zumindest einen Zahns flacher ist als ein Flankenwinkel der Nichtlastflanke des zumindest einen Zahns. Ebenfalls vorzugsweise weist ein Bereich um die Zahnspitze des zumindest einen Zahns eine Neigung überwiegend hin zu der Nichtlastflanke des Zahns auf.

Mit dem flacheren Lastflankenwinkel und/oder mit der Neigung des Zahnspitzenbereichs überwiegend hin zu der Nichtlastflanke wird erreicht, dass die Kette leichter aus einem etwaigen unerwünscht desynchronisierten Lauf auf einer Kettenrolle mit Dick-Dünn-Zähnen rasch und definiert wieder in den synchronen Lauf auf der Kettenrolle wechseln kann, bzw. dass eine entstehende Desynchronisation verhindert wird. Insbesondere führt der zur Nichtlastflanke abfallende Zahnspitzenbereich dazu, dass die desynchronisierte und damit auf den Zahnflanken bzw. Zahnspitzen nach radial außen aufreitende Kette ein Relativdrehmoment zwischen der Kette und der Kettenrolle erzeugt, welches dazu führt, dass die Kettenrolle sich relativ zur Kette dreht solange, bis die Kette wieder in den synchronisierten Eingriff mit der Kettenrolle gelangt und sich dort stabilisiert. Auch wirkt ein steilerer Winkel der Nichtlastflanke der Zähne der Kettenführungsrolle (welcher beim Rückwärtstreten zu einer Lastflanke wird) einer Desynchronisation der Kette entgegen, so dass diese weniger häufig überhaupt auftritt.

Die Erfindung lässt sich an jeder Kettenrolle verwirklichen, indem, wie oben beschrieben, ein inboardseitiger Führungsbereich des zumindest einen Zahns, oder vorzugsweise aller Zähne, gegenüber einem outboardseitigen Führungsbereich des Zahns, vorzugsweise aller Zähne der Kettenrolle, die beschriebene, zumindest bereichsweise reduzierte Dickenabmessung erhält.

Bevorzugt weist die Kettenführungsrolle jedoch eine geradzahlige Vielzahl von Zähnen auf, welche in Umfangsrichtung alternierend jeweils einer ersten oder einer zweiten Zahngruppe zugeordnet sind. Dabei sind die Zähne der ersten Zahngruppe schmale Zähne, welche schmaler sind als ein Ketteninnenlaschenabstand der Kette, so dass diese schmalen Zähne leicht in den Laschenzwischenraum zwischen den relativ eng beieinander stehenden Innenlaschen eines Innenlaschen-Kettenglieds eintreten können.

Die Zähne der zweiten Zahngruppe umfassen zumindest einen breiten Zahn, vorzugsweise sind mehrere oder alle Zähne der zweiten Zahngruppe breit ausgeführt dergestalt, dass die breiten Zähne nur in den Laschenzwischenraum zwischen den relativ weit auseinanderstehenden Außenlaschen eines Außenlaschen-Kettenglieds eintreten können, nicht jedoch in den Laschenzwischenraum eines Innenlaschen-Kettenglieds.

Dies bedeutet mit anderen Worten, dass die Kettenführungsrolle vorzugsweise als sog. X-Sync-Kettenführungsrolle ausgeführt ist, welche abwechselnd dicke und dünne Zähne aufweist. Dies hat den Vorteil, dass die seitliche Führungswirkung der Kettenführungsrolle entlang der Kettenrollen-axialen Richtung auf den zwischen der Kettenführungsrolle und der Ritzelkassette im Wesentlichen tangential überlaufenden Kettenabschnitt insgesamt erhöht wird, was der Schaltpräzision zugute kommt. Zudem wird auf diese Weise die Führungswirkung der dicken Zähne gegenüber den Außenlaschen-Kettengliedern an die Führungswirkung der dünnen Zähne gegenüber den Innenlaschen-Kettengliedern angeglichen und damit vergleichmäßigt. Auch dies dient der Verbesserung der Schaltpräzision beim Gangwechsel zwischen verschiedenen Ritzeln der Ritzelkassette.

Ferner ist vorzugsweise vorgesehen, dass zumindest ein Zahn der ersten Zahngruppe, bevorzugt alle Zähne der ersten Zahngruppe, gegenüber zumindest einem Zahn, vorzugsweise gegenüber allen Zähnen der zweiten Zahngruppe eine reduzierte Zahnhöhe in Radialrichtung aufweist.

Auch diese verringerte Höhe der Zähne der ersten Zahngruppe, also der zum Eingriff in die Innenlaschen-Kettenglieder vorgesehenen schmalen Zähne dient einerseits der vergleichmäßigten seitlichen Führung in Kettenrollen-axialer Richtung des zwischen Kettenführungsrolle und Ritzelkassette überlaufenden Kettenabschnitts auf den abwechselnd dicken und dünnen Zähnen. Andererseits trägt diese Ausgestaltung ebenfalls dazu bei, dass eine auf der Kettenführungsrolle etwa desynchronisiert und somit auf den Zahnspitzen der dicken Zähne aufreitende Kette rasch wieder in die synchronisierte Stellung übergeführt wird, insbesondere im Zusammenwirken mit den bevorzugt zur Nichtlastflanke hin stärker abfallenden Zahnspitzen auch der dünnen Zähne.

Weiterhin ist bevorzugt vorgesehen, dass einer oder beide Flankenwinkel zumindest eines Zahns, vorzugsweise mehrerer bzw. aller Zähne der ersten Zahngruppe, also der dünnen Zähne, flacher sind als der entsprechende Flankenwinkel zumindest eines, vorzugsweise mehrerer bzw. aller Zähne der zweiten Zahngruppe, also der dicken Zähne.

Auch diese Ausführung der Flankenwinkel an den Zähnen der Kettenführungsrolle dient der Verbesserung der Resynchronisierung der Kette, falls diese unerwünscht desynchronisiert auf der Kettenrolle laufen, insbesondere mit einem oder mehreren Innenlaschen-Kettengliedern auf den Zahnspitzen der dicken Zähne aufbereiten sollte. Damit wird der Tatsache Rechnung getragen, dass der Beitrag der dünnen Zähne zur Resynchronisation einer desynchronisieren Kette geringer ist als der Beitrag der dicken Zähne, da die dünnen Zähne im desynchronisieren Zustand kaum Kontakt zu den Kettenlaschen haben, weshalb die dünnen Zähne von der Kette hauptsächlich nur passiv überwunden werden müssen, um die Kette wieder in den synchronisierten Zustand zu bringen.

Die Erfindung betrifft ferner ein hinteres Fahrradschaltwerk, welches ein mit einem Fahrrad-Hinterbaurahmen verbindbares Basiselement, in der Branche auch bekannt als B-Knuckle, ein mittels eines Schwenkmechanismus gegenüber dem Basiselement bewegbares Schaltungselement, in der Branche auch bekannt als P-Knuckle, sowie eine mit dem Schaltungselement schwenkbar verbundene Kettenführungseinrichtung, auch bekannt als Kettenkäfig oder Käfigbaugruppe, mit einer oberen und einer unteren Kettenführungsrolle, umfasst.

Weiterhin betrifft die Erfindung einen Fahrrad-Antriebsstrang, welcher zumindest ein vorderes Kettenrad oder Kettenblatt, eine hintere Mehrfach-Ritzelanordnung, auch bezeichnet als Ritzelkassette, sowie ein hinteres Schaltwerk mit einer oberen und einer unteren Kettenrolle umfasst. Das Fahrradschaltwerk bzw. der Fahrrad-Antriebsstrang zeichnen sich durch eine Kettenführungsrolle mit Zähnen wie vorstehend beschrieben aus.

Nach einer bevorzugten Ausführungsform des Fahrrad-Antriebsstrangs weist die Ritzelkassette zumindest ein Ritzel mit einer geradzahligen Vielzahl von Zähnen auf, die in Umfangsrichtung alternierend jeweils einer ersten oder einer zweiten Zahngruppe zugeordnet sind. Dabei sind die Zähne der ersten Zahngruppe schmale Zähne, die schmaler sind als ein Ketteninnenlaschenabstand, und die zweite Zahngruppe umfasst zumindest einen breiten Zahn, vorzugsweise betrifft dies mehrere oder alle Zähne der zweiten Zahngruppe, dessen bzw. deren Breite größer ist als ein Ketteninnenlaschenabstand. Somit kann der bzw. können die breiten Zähne des zumindest einen Ritzels der Ritzelkassette nur in den Laschenzwischenraum eines Außenlaschen-Kettenglieds, jedoch nicht in den Laschenzwischenraum eines Innenlaschen-Kettenglieds vollständig eintauchen.

Eine weitere bevorzugte Ausführungsformen des Fahrrad-Antriebsstrangs zeichnet sich dadurch aus, dass das hintere Schaltwerk ein Straight-Pin-Schaltwerk mit nicht oder nur geringfügig geneigtem Schaltparallelogramm ist. Zur näheren Spezifizierung der Geometrie und die Eigenschaften des Straight-Pin-Schaltwerks wird auf die Beschreibungseinleitung weiter oben verwiesen.

Anhand des vorstehend sowie nachfolgend in der Figurenbeschreibung beschriebenen Zusammenwirkens aller Komponenten des Fahrrad-Antriebsstrangs wird dem Fachmann deutlich, dass die Gestaltung der erfindungsgemäßen Kettenführungsrolle Einflüsse auf das gesamte Fahrrad-Schaltwerk ebenso wie auf den gesamten Fahrrad-Antriebsstrang hat. Insbesondere ermöglicht die erfindungsgemäße Kettenführungsrolle durch die damit erreichbare richtungsspezifisch verbesserte Schaltpräzision in Inboardrichtung sowie in Outboardrichtung sowie aufgrund der besseren und gleichmäßigeren Kettenführung Anpassungen und Optimierungen an den anderen Komponenten des Antriebsstrangs, insbesondere an der Ritzelkassette sowie am Schaltwerk, einschließlich der Dimensionierung der Schaltwerksgeometrie sowie einschließlich der Anordnung und Positionierung des Schaltwerks gegenüber dem Fahrradrahmen bzw. Rahmenhinterbau, die ohne die erfindungsgemäße Kettenführungsrolle so nicht möglich wären, bzw. die zu Verschlechterungen im Betrieb und beim Schaltvorgang führen würden.

Beispielsweise lassen sich dank der erfindungsgemäßen Kettenführungsrolle die Schaltfeatures bzw. Schaltgassen der Ritzelkassette, insbesondere diejenigen zum Schalten in Inboardrichtung, deutlicher bzw. schärfer ausführen, ohne dass es zu einer Erhöhung von verfrühten Schaltvorgängen kommt. Ebenso kann der gesamte Antriebsstrang aufgrund der besseren Kettenführungseigenschaften in Kettenrollen-axialer Richtung sowie aufgrund der besseren Synchronisationseigenschaften der erfindungsgemäßen Kettenrolle kompakter ausgelegt und flexibler relativ zum Rahmenhinterbau positioniert werden.

Dem Fachmann wird somit deutlich, dass ein mit der erfindungsgemäßen Kettenführungsrolle ausgestattetes Schaltwerk bzw. ein mit einem solchen Schaltwerk versehener Fahrrad-Antriebsstrang sowohl für sich genommen als auch als abgestimmtes Gesamtsystem maßgebliche Verbesserungen sowohl bei der konstruktiven Auslegung des gesamten Antriebsstrangs als auch im Fahr- und Schaltbetrieb mit sich bringt.

Nachfolgend werden Ausführungsformen der Erfindung anhand der Figuren beispielhaft beschrieben. Die Anmelderin weist darauf hin, dass sämtliche Figuren auf einem CAD-Modell eines bevorzugten Ausführungsbeispiels basieren und maßstabsgetreu sind, weshalb etwaige nicht eigens beschriebene Zusammenhänge oder Abmessungen aus den Figuren entnommen werden können.

Es zeigt:
- Fig. 1:: ein Mountainbike mit 1-fach-Antriebsstrang, also mit einem einzigen Kettenblatt, mit Ritzelkassette und hinteren Schaltwerk;
- Fig. 2:: den Antriebsstrang einschließlich Schaltwerk eines Mountainbikes gemäß Fig. 1;
- Fig. 3:: den Antriebsstrang einschließlich Schaltwerk gemäß Fig. 2 in perspektivischer Schrägansicht von hinten;
- Fig. 4:: Teile der Ritzelkassette sowie eine Kettenführungsrolle eines Antriebsstrang ähnlich Fig. 1 bis 3 in einer Rückansicht mit schematisch angedeuteten Kettenverläufen bei den Schaltvorgängen;
- Fig. 5:: die Kettenführungsrolle, einen Kettenabschnitt sowie ein Ritzelpaar der Ritzelkassette gemäß Fig. 4 in einer Seitenansicht von Outboard bei einem Inboard-Schaltvorgang mit eingezeichnetem Detailausschnitt A sowie zugehöriger Blickrichtung;
- Fig. 6:: die Kettenführungsrolle, den Kettenabschnitt sowie das Ritzelpaar gemäß Fig. 5 in einer vergrößerten, rückwärtigen Ansicht gemäß Detailausschnitt und Blickrichtung A in Fig. 5 bei einem Inboard-Schaltvorgang;
- Fig. 7:: die Kettenführungsrolle, den Kettenabschnitt sowie das Ritzelpaar gemäß Fig. 5 und 6 in einer vergrößerten, rückwärtigen Perspektivansicht gemäß Detailausschnitt A in Fig. 5 bei einem Outboard-Schaltvorgang;
- Fig. 8:: eine Kettenführungsrolle gemäß Fig. 4 bis 7 zusammen mit einem Kettenabschnitt in einer gedrehten Seitenansicht auf die Outboardseite der Kettenrolle mit eingezeichneten Blickrichtungen A und B;
- Fig. 9:: die Kettenführungsrolle mit dem Kettenabschnitt gemäß Fig. 8 aus Blickrichtung A gemäß Fig. 8 (fahrradbezogen von oben) bei einem Inboard-Schaltvorgang;
- Fig. 10:: die Kettenführungsrolle mit dem Kettenabschnitt gemäß Fig. 8 und 9 mit einem Ritzelpaar gemäß Fig. 5 aus Blickrichtung B gemäß Fig. 8 (fahrradbezogen von hinten) bei einem Outboard-Schaltvorgang;
- Fig. 11:: die Kettenführungsrolle mit dem Kettenabschnitt gemäß Fig. 8 bis 10 aus Blickrichtung A gemäß Fig. 8 (fahrradbezogen von oben) bei einem Inboard-Schaltvorgang;
- Fig. 12:: die Kettenführungsrolle mit dem Kettenabschnitt gemäß Fig. 8 bis 11 mit einem Ritzelpaar gemäß Fig. 5 aus Blickrichtung B gemäß Fig. 8 (fahrradbezogen von hinten) bei einem Outboard-Schaltvorgang;
- Fig. 13:: die Kettenführungsrolle gemäß Fig. 4 bis 12 mit einem Kettenabschnitt ähnlich Fig. 5 bis 12 sowie mit einem Ritzelpaar gemäß Fig. 5 in einer Seitenansicht von Outboard;
- Fig. 14:: die Kettenführungsrolle, den Kettenabschnitt sowie das Ritzelpaar gemäß Fig. 13 in einer Seitenansicht von Inboard;
- Fig. 15:: die Kettenführungsrolle gemäß Figuren 1 bis 14 in einer perspektivischen Schrägansicht von vorne auf die Inboardseite der Kettenführungsrolle;
- Fig. 16:: die Kettenführungsrolle gemäß Fig. 15 in einer perspektivischen Schrägansicht von vorne auf die Outboardseite der Kettenführungsrolle;
- Fig. 17:: die Kettenführungsrolle gemäß Fig. 4 bis 16 in einer Seitenansicht auf die Inboardseite der Kettenrolle mit Schnittebenen für Fig. 18;
- Fig. 18:: die Kettenführungsrolle gemäß Fig. 17 in Schnittdarstellungen gemäß der Schnittebenen in Fig. 17;
- Fig. 19:: die Kettenführungsrolle gemäß Fig. 4 bis 18 in vergrößerter Ausschnittsdarstellung in rückseitiger Ansicht;
- Fig. 20:: die Kettenführungsrolle gemäß Fig. 4 bis 19 in einer Seitenansicht von Inboard;
- Fig. 21:: die Kettenführungsrolle gemäß Fig. 20 in einer Seitenansicht von Outboard;
- Fig. 22:: einen vergrößerten Detailausschnitt A der Kettenführungsrolle gemäß Fig. 20;
- Fig. 23:: ein vergrößerten Detailausschnitt B der Kettenführungsrolle gemäß Fig. 21.
- Fig. 24:: eine weitere Ausführungsform einer Kettenführungsrolle in einer Fig. 15 entsprechenden perspektivischen Schrägansicht von vorne auf die Inboardseite der Kettenführungsrolle;
- Fig. 25:: die Kettenführungsrolle gemäß Fig. 24 in einer Fig. 16 entsprechenden, teilweise geschnittenen, perspektivischen Schrägansicht von vorne auf die Outboardseite der Kettenführungsrolle; und
- Fig. 26:: die Kettenführungsrolle gemäß Fig. 24 und 25 in einem Längsschnitt durch die Zahnspitzen.

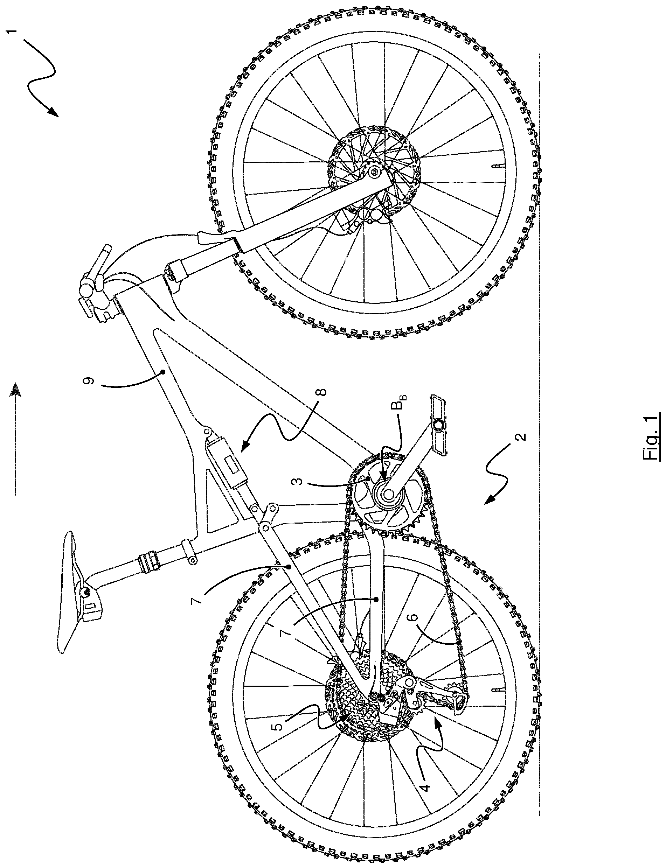

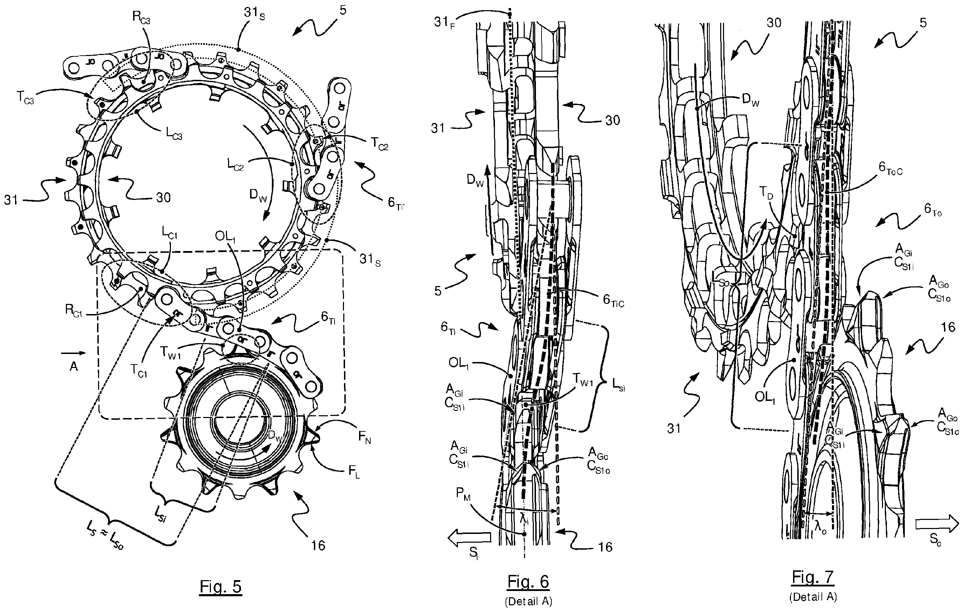

Fig. 1 zeigt ein Mountainbike 1 mit einem sog. 1-fach-Antriebsstrang 2, also einem Antriebsstrang mit einem einzigen Kettenblatt 3, mit einem hinteren Schaltwerk 4, einer Mehrfach-Ritzelkassette 5 sowie mit einer Kette 6. Der Antriebsstrang befindet sich im Bereich eines Hinterbaurahmens 7, welcher hier mittels einer Feder/Dämpfer-Einrichtung 8 schwenkbeweglich mit einem Vorderbaurahmen 9 verbunden ist. Im Unterschied zu den Fig. 5ff. mit der dort teilweise gezeigten sog. Flat-Top-Kette ist das Mountainbike gemäß Fig. 1 mit einer konventionellen Kette ausgestattet.

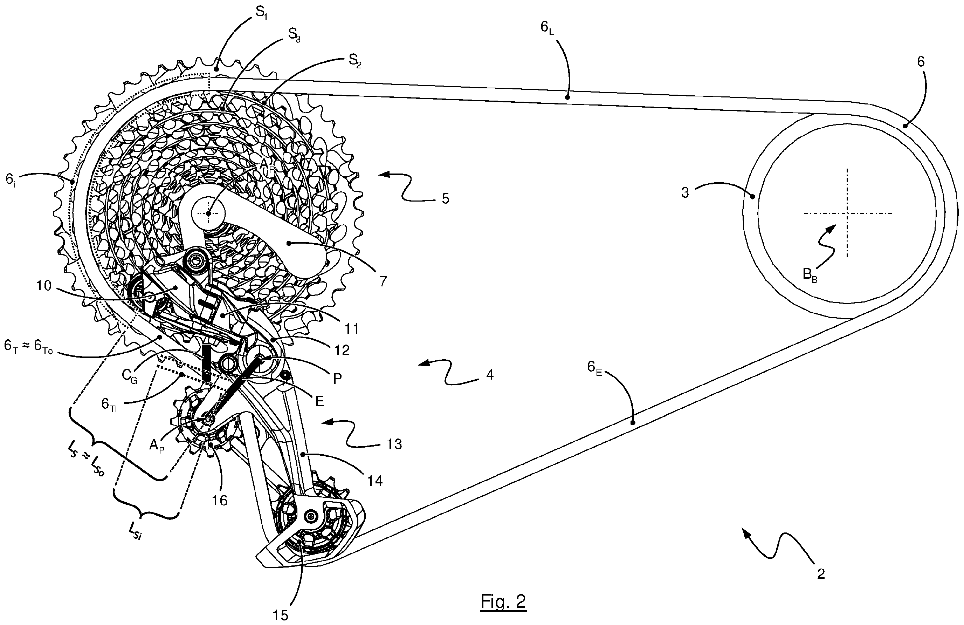

Fig. 2 zeigt den Antriebsstrang 2 des Mountainbikes 1 gemäß Fig. 1 in einer gegenüber Fig. 1 vergrößerten Darstellung, wobei Kettenblatt 3 ebenso wie Hinterbaurahmen 7 in Fig. 2 nur schematisch angedeutet sind.

Bezüglich des Schaltwerks 4 erkennt man ein mit dem Hinterbaurahmen 7 verbundenes Basiselement 10, in der Branche auch als B-Knuckle bekannt, welches mittels einer parallelogrammartigen Schwenkanordnung 11 mit einem gegenüber dem Basiselement 10 im Wesentlichen horizontal bewegbaren Schaltungselement 12, in der Branche auch als P-Knuckle bezeichnet, verbunden ist. Mit dem Schaltungselement 12 ist eine Kettenführungseinrichtung 13, auch als Kettenkäfiganordnung oder Kettenkäfig bekannt, um eine Achse P federbelastet schwenkbar verbunden.

Die Kettenführungseinrichtung 13 umfasst den eigentlichen Kettenkäfig 14 sowie eine untere Kettenspannrolle 15 zur Aufnahme des Leertrums 6_{E} der Kette 6 und zur Aufrechterhaltung der Kettenspannung. Weiterhin umfasst die Kettenführungseinrichtung 13 eine obere Kettenführungsrolle 16 zur Führung der Kette 6 auf die Ritzel der Ritzelkassette 5.

Die obere Kettenführungsrolle 16 dient auch zum Umlegen eines zwischen der Kettenführungsrolle 16 und einem Ritzel der Ritzelkassette 5 überlaufenden Kettenabschnitts 6_{T} der Kette 6 zwischen den verschiedenen Ritzeln der Ritzelkassette 5 bei den Schaltvorgängen.

1-fach-Antriebsstränge gemäß Fig. 1 oder 2, also Antriebsstränge mit nur einem Kettenrad und mit weit gespreizten Zahnkranzkassetten, die oft eine Gangspreizung der Kassette zwischen der größten und der kleinsten Übersetzung beispielsweise von 400 % oder mehr aufweisen, haben sich an höherwertigen Mountainbikes in den letzten Jahren durchgesetzt.

Unter anderem, um Bedienkräfte beim Schalten zwischen den verschiedenen Übersetzungen der Kassette gering zu halten, werden in Kombination mit derartigen Kassetten vornehmlich Schaltwerke mit nicht geneigtem oder mit nur wenig geneigtem Parallelogramm verbaut. Derartige Schaltwerke sind beispielsweise aus den Druckschriften EP2641823B1 und EP3388324A3 bekannt, wie obenstehend in der Beschreibungseinleitung ausführlich dargestellt. Ein derartiges Schaltwerk liegt auch bei dem Antriebsstrang gemäß Fig. 1 bzw. 2 vor.

Um bei allen verschiedenen Übersetzungen der Ritzelkassette einen geeigneten sog. Chain-Gap C_{G} (radialer Abstand zwischen Kettenführungsrolle 16 und Ritzel der Ritzelkassette 5, in Fig. 2 visualisiert mit dem schwarzen Balken C_{G}) einhalten zu können, ist bei derartigen Schaltwerken 4 der Abstand E zwischen der Achse A_{P} der Kettenführungsrolle 16 des Schaltwerks 4 und der Schwenkachse P des P-Knuckle im Vergleich zu herkömmlichen Schaltwerken mit Schrägparallelogramm deutlich vergrößert.

Eine Folge hiervon ist, dass der Chain Gap C_{G} bei derartigen Schaltwerken 4 deutlich stärker von der Kettenlänge sowie von anderen Faktoren abhängt, wie beispielsweise von einer etwaigen Federungskinematik einer Hinterbaufederung 8 sowie von dem mit der Zeit auftretendem Verschleiß der Kette 6. Hierdurch reagiert der Antriebsstrang bei derartigen Schaltwerken 4 mit nicht oder wenig geneigtem Parallelogramm 11 insgesamt deutlich sensibler auf die Größe des Chain-Gap C_{G} als bei herkömmlichen Schaltwerken mit Schrägparallelogramm.

Der Chain-Gap C_{G} spielt damit bei derartigen Schaltwerken 4 mit nicht oder wenig geneigtem Parallelogramm 11 eine zentrale Rolle bei der Funktion des Schaltsystems und des Antriebsstrangs. Er ist maßgeblich dafür verantwortlich, dass die Formelemente für Schalt- und Abweisfunktionen (vgl. Fig. 5) im Bereich der Schaltgassen der Ritzel der Zahnkranzkassette 5 korrekt zum Einsatz kommen, dass somit die Kette 6 an den dafür vorgesehenen Rotationspositionen der Kassette 5 schaltet bzw. an den nicht dafür vorgesehenen Rotationspositionen der Kassette 5 abgewiesen wird, und dass insgesamt keine Bauteile des Antriebsstrangs durch schlechte Schaltqualität oder Kollisionen beschädigt werden.

Der Chain-Gap C_{G} beeinflusst weiterhin auch die Länge Lₛ des zwischen der Kettenführungsrolle 16 und dem aktuell mit der Kette 6 in Eingriff befindlichen Ritzel S₂ der Ritzelkassette 5 überlaufenden Kettenabschnitts 6_{T}. Noch stärker beeinflusst wird die Länge Lₛ des überlaufenden Kettenabschnitts 6_{T} jedoch bei tatsächlichen Schaltvorgängen von der Schaltposition des Schaltwerks-Schaltungselements 12 entlang der zur Hinterachse A_{R} im Wesentlichen parallelen Schaltrichtung.

Diesbezüglich erkennt man in Fig. 2, dass der zwischen der Kettenführungsrolle 16 und dem zweitgrößte Ritzel S₂ überlaufende Kettenabschnitt 6_{T} die Länge Lₛ aufweist. Diese Länge Lₛ des überlaufenden Kettenabschnitt 6_{T} liegt dann vor, wenn die Kette 6 im Fahrbetrieb auf das zweitgrößte Ritzel S₂ geschaltet ist.

Näherungsweise dieselbe Länge L_{So} ≈ Lₛ des überlaufenden Kettenabschnitts 6_{T} liegt auch dann vor, wenn beispielsweise und wie in Fig. 2 angedeutet, vom zweiten Ritzel S₂ in Richtung Outboard auf das dritte Ritzel S₃ geschaltet wird, und zwar bei Schaltbeginn, bei welchem sich der in Eingriff mit der Ritzelkassette stehende Bereich 6i der Kette 6 anfangs noch vollständig auf dem zweitgrößten Ritzel S₂ befindet.

Der überlaufende Kettenabschnitt 6_{Ti} ist bei einem entsprechenden Inboard-Schaltvorgang jedoch bedeutend kürzer als beim normalen Kettenlauf sowie beim Outboard-Schalten, was in Fig. 2 durch den punktierten Verlauf 6_{Ti} des in diesem Fall bereits unmittelbar nach Outboard-Schaltbeginn auf das größte Ritzel S₁ überlaufenden Kettenabschnitts 6_{Ti} angedeutet ist.

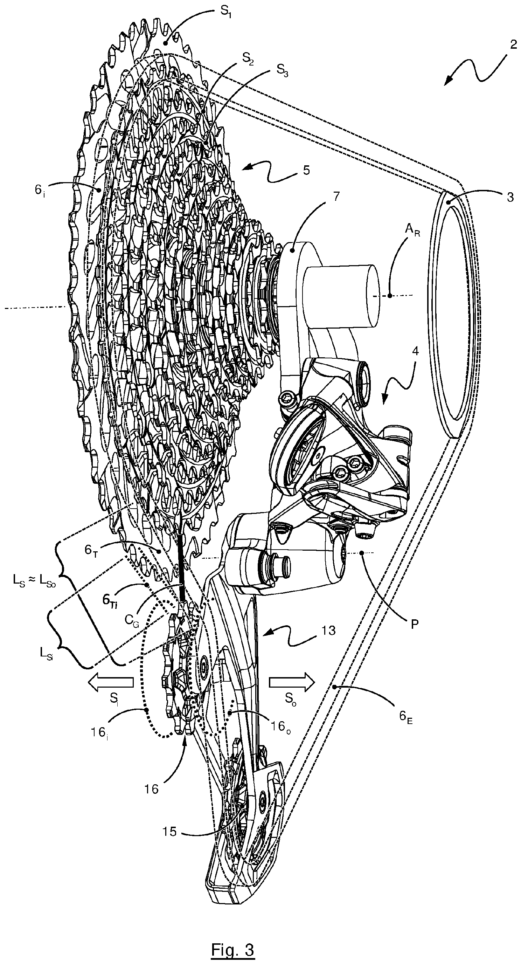

Zur besseren Verdeutlichung dieser Zusammenhänge mit dem Schaltvorgang des Schaltwerks 4 sind die wesentlichen geometrischen Größen nochmals in der perspektivischen Schrägansicht des Antriebsstrangs 2 gemäß Fig. 3 dargestellt. Man erkennt, dass die Kette 6 zunächst auf das zweitgrößte Ritzel S₂ geschaltet ist, wodurch sich ein Chain Gap C_{G} von konstruktiv vorgesehener Länge zwischen der Kettenführungsrolle 16 und dem Ritzel S₂ ergibt. Der Chain-Gap C_{G} führt zusammen mit den räumlichen Relativpositionen der Kettenführungsrolle 16 und dem Ritzel S₂ zu einer Länge Lₛ des zwischen Kettenführungsrolle 16 und Ritzel S₂ überlaufenden Kettenabschnitts 6_{T}.

Diese Länge Lₛ für den überlaufenden Kettenabschnitt 6_{T} bleibt (als Länge L_{So}) im Wesentlichen auch bei einem Outboard-Schaltvorgang Sₒ anfangs erhalten, wenn sich also das Schaltungselement 12 des Schaltwerks 4 im Wesentlichen horizontal parallel zur Hinterachse A_{R} nach Outboard, zeichnungsbezogen also nach rechts verschoben hat so weit, bis die Kettenführungsrolle 16 vertikal exakt unterhalb des nächstkleineren Ritzels S₃ befindet. Letzteres wird in Fig. 3 durch die punktierte Position 16ₒ der Kettenführungsrolle 16 angedeutet.

Diese beim Outboard-Schaltvorgang Sₒ anfangs nahezu unverändert bleibende Länge L_{So} ≈ Lₛ des überlaufenden Kettenabschnitts 6_{To} ≈ 6_{T} liegt darin begründet, dass der auf der Kassette befindliche Kettenabschnitt 6i zu Beginn des Outboard-Schaltvorgangs Sₒ weiterhin noch auf dem zu verlassenden Ritzel S₂ läuft so lange, bis auf demselben Ritzel S₂ eine Outboard-Schaltgasse mit entsprechenden Schaltzähnen erreicht wird, wodurch der überlaufende Kettenabschnitt 6_{T} auf das Zielritzel S₃ zu wechseln beginnt (vgl. Fig. 7). Entscheidend für die korrekte Einleitung des Outboard-Schaltvorgangs Sₒ sind damit jedoch Länge L_{So} ≈ Lₛ und Richtung des überlaufenden Kettenabschnitts 6_{To} ≈ 6_{T}, solange der auf der Ritzelkassette 5 befindliche Abschnitt 6i der Kette 6 noch vollständig auf dem zu verlassenden Ritzel S₂ läuft, während sich die Kettenführungsrolle 16 bereits in der Ziel-Schaltposition bei 16ₒ befindet.

Im umgekehrten Fall, also bei einem Inboard-Schaltvorgang Si, beispielsweise vom zweitgrößten Ritzel S₂ auf das größte Ritzel Si, in Fig. 3 zeichnungsbezogen also nach links, für den das im Wesentlichen horizontal bewegbare Schaltungselement 12 die obere Kettenführungsrolle 16 in die ebenfalls punktiert dargestellte Position 16i verfährt, ergibt sich für den in Fig. 3 wieder punktiert dargestellten überlaufenden Kettenabschnitt 6_{Ti} jedoch bereits beim Schaltbeginn die deutlich kürzere Länge Lsi, wie auch schon vorstehend zu der Darstellung in Fig. 2 angedeutet.

Dies hängt damit zusammen, dass der überlaufende Kettenabschnitt 6_{Ti} der Kette 6 beim Inboard-Schalten Si mit seinem inboardseitigen Rand bereits beim Schaltbeginn an die outboardseitige Stirnfläche des größeren Ritzels S₁ gepresst wird und dort so lange streifend gleitet, bis eine passende Outboard-Schaltgasse am Zielritzel S₁ erreicht wird, wonach der überlaufende Kettenabschnitt 6_{Ti} sprungartig auf das Zielritzel S₁ wechselt (vgl. Fig. 5 und 6).

Mit anderen Worten ist hinsichtlich des Unterschieds zwischen dem Inboard-Schaltvorgang Si und dem Outboard-Schaltvorgang Sₒ zu beachten, dass der überlaufende Kettenabschnitt 6_{Ti} beim Inboard-Schaltvorgang Si stets von einer Schaltgasse auf dem größeren Zielritzel erfasst wird, weshalb beim Inboard-Schaltvorgang Si regelmäßig ein verhältnismäßig kurzer überlaufender Kettenabschnitt 6_{Ti} zur Wirkung kommt, wohingegen beim Outboard-Schaltvorgang Sₒ der überlaufende Kettenabschnitt 6_{To} mit einer Schaltgasse auf dem zu verlassenden Ritzel interagiert, weshalb beim Outboard-Schaltvorgang Sₒ regelmäßig ein verhältnismäßig langer überlaufender Kettenabschnitt 6_{To} zur Wirkung kommt. Insgesamt sind Kette 6 und Ritzelkassette 5 beim Stand der Technik aufgrund des deutlich kleineren Chain-Gaps C_{G} beim Inboard-Schalten Si somit grundsätzlich schaltwilliger als beim Outboard-Schalten Sₒ.

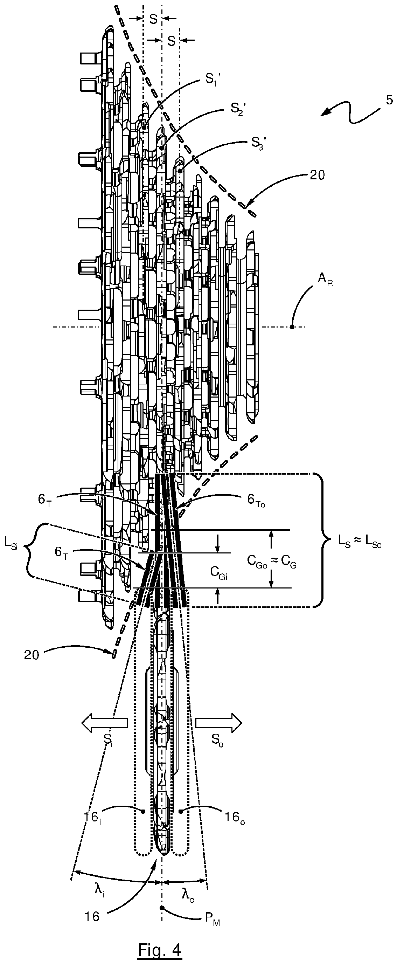

Diese Zusammenhänge sind nochmals in Fig. 4 schematisch visualisiert. Man erkennt einen Teil der Ritzelkassette 5, weiterhin eine obere Kettenführungsrolle 16 sowie (höchst schematisch in Form von Doppellinien angedeutet) einmal den überlaufenden Kettenabschnitt 6_{T} beim normalen, geraden Kettenlauf auf dem Ritzel S₂', einmal den zwischen Zielritzel S₁' und Kettenführungsrolle 16 überlaufenden Kettenabschnitt 6_{Ti} beim Inboard-Schalten Si vom Ausgangsritzel S₂' auf das größere Zielritzel Si', und einmal den überlaufenden Kettenabschnitt 6_{To} beim Outboard-Schalten Sₒ vom Ritzel S₂' auf das kleinere Ritzel S₃'.

Das in Rede stehende Schaltwerk 4 weist, wie in der Beschreibungseinleitung dargelegt und in Fig. 1 bis 3 gezeigt, aus den z.B. in der Druckschrift EP2641823B1 genannten Gründen kein Schrägparallelogramm auf, welches beim Schalten die Kettenführungsrolle 16 der in Fig. 4 durch strichlierte Linien angedeuteten Zahnspitzenkontur 20 unmittelbar beim Schalten nachführen würde. Vielmehr ist das Schaltwerk 4 ein Straight-Pin-Schaltwerk mit nicht oder nur wenig geneigtem Schaltparallelogramm 11, weshalb die obere Kettenführungsrolle 16 sowohl beim InboardSchalten Si als auch beim Outboard-Schalten Sₒ durch das Schaltparallelogramm 11 zunächst im Wesentlichen rein horizontal verschoben wird.

Die vertikale Komponente der Nachführung der Kettenführungsrolle 16 entlang der Zahnspitzenkontur 20 der Ritzelkassette 5 erfolgt bei derartigen Schaltwerken 4 mit nicht oder nur wenig geneigtem Parallelogramm 11, wie weiter oben beschrieben, aufgrund des großen Abstands E zwischen der Achse A_{P} der Kettenführungsrolle 16 und der Schwenkachse P des Kettenkäfigs 13, erst allmählich bei der weiteren Rotation der Ritzelkassette 5 solange, bis der in Eingriff mit der Ritzelkassette 5 stehende Bereich 6i der Kette 6 (vgl. Fig. 2) vollständig entweder mit dem größeren Zielritzel S₁, S₁' oder mit dem kleineren Zielritzel S₃, S₃' in Eingriff steht.

Die Ursache dafür ist, dass bei Inboard-Schaltvorgängen Si mit derartigen Schaltwerken 4 mit nicht oder nur wenig geneigtem Schaltparallelogramm 11 der Kettenkäfig 13 nach der Bewegung der Kettenführungsrolle 16 durch das Schaltwerk 4 in die Position 16i, erst dann allmählich durch die auf das größere Ritzel Si, S₁' überlaufende Kette 6 gegen den Uhrzeigersinn um seine Schwenkachse P geschwenkt wird, und somit das vertikale Nachführen der oberen Kettenführungsrolle 16 entlang der kegelformähnlichen Zahnspitzenkontur 20 der Ritzelkassette 5 erst dann beginnt, wenn die Kette 6 bereits in das größere Ritzel Si, S₁' eingreift. Das vollständige Schwenken des Kettenkäfigs 11 und damit die gewünschte vertikale Nachführung der Kettenführungsrolle 16 und die Herstellung des gewünschten Chain Gap C_{G} zwischen der Kettenführungsrolle 16 und dem größeren Ritzel Si, S₁' ist bei derartigen Schaltwerken 4 also erst dann beendet, wenn die Kette 6 das vorherige Ritzel S₂, S₂' vollständig verlassen hat und vollständig auf dem größeren Ritzel Si, S₁' läuft.

Ähnliches gilt für Outboard-Schaltvorgänge Sₒ, bei denen die Kettenführungsrolle 16 vom Schaltwerk 4 anfangs im Wesentlichen rein horizontal nach rechts bzw. in Richtung Outboard in die Position 16ₒ bewegt wird, und bei denen sich die vertikale Komponente der Nachführung der Kettenführungsrolle 16 entlang der Zahnspitzenkontur 20 der Ritzelkassette 5 erst nach weiterer Rotation der Ritzelkassette 5 und erst mit dem vollständigen Schwenken des Kettenkäfigs 11 dann einstellt, wenn der in Eingriff mit der Ritzelkassette stehende Bereich 6i der Kette 6 (vgl. Fig. 2) das Ausgangsritzel S₂, S₂' vollständig verlassen hat und vollständig auf dem kleineren Zielritzel S₃, S₃' läuft.

Bei Outboard-Schaltvorgängen Sₒ wird also der Kettenkäfig 13 erst dann allmählich durch die auf das kleinere Ritzel S₃, S₃' überlaufende Kette 6 im Uhrzeigersinn um seine Schwenkachse P geschwenkt, und somit die obere Kettenführungsrolle 16 entlang der kegelformähnlichen Zahnspitzenkontur 20 der Ritzelkassette 5 erst dann vertikal nachgeführt, wenn die Kette 6 bereits in das kleinere Ritzel S₃, S₃' eingreift.

Bei den in Rede stehenden Schaltwerken 4 mit nicht oder nur wenig geneigtem Schaltparallelogramm 11 verändert bei Schaltvorgängen somit erst das nach Beginn des Schaltvorgangs erfolgende Schwenken des Kettenkäfigs 13 den Chain-Gap C_{G}, also den Abstand zwischen oberer Kettenführungsrolle 16 und dem jeweiligen Ziel-Ritzel S₁, S₁' bzw. S₃, S₃'.

Weiterhin bezugnehmend auf Fig. 4 bedeutet dies, dass die Kettenführungsrolle 16 bei einem Inboard-Schaltvorgang Si bereits vor Beginn des Schwenkens des Kettenkäfigs 13, und damit vor der erst im weiteren Verlauf des Schaltvorgangs erfolgenden Anpassung des Chain-Gap, horizontal nach Inboard in die Position 16i verschoben wird, wodurch die Kettenführungsrolle 16 den überlaufenden Kettenabschnitt 6_{Ti} zu Beginn des Inboard-Schaltvorgangs Si mit nur geringem radialem Abstand C_{Gi} gegen das größere Ritzel drückt.

Aufgrunddessen ist auch der von der nach Inboard geschalteten Kettenführungsrolle 16 in deren Position 16i auf das größere Zielritzel S₁' überlaufende Kettenabschnitt 6_{Ti} (vgl. Fig. 2 und 3) mit dessen Länge Lsi bedeutend kürzer als der zuvor zwischen der Kettenführungsrolle 16 und dem zu verlassenden Ritzel S₂' verlaufende Kettenabschnitt 6_{T} mit der Länge Lₛ.

Beim Outboard-Schalten Sₒ wird die Kettenführungsrolle 16 vom Schaltwerk 4 zunächst im Wesentlichen rein horizontal nach rechts bzw. nach Outboard in die Position 16ₒ gemäß Fig. 4 verschoben, und die vertikale Komponente der Nachführung der Kettenführungsrolle 16 entlang der Zahnspitzenkontur 20 der Ritzelkassette 5 erfolgt, wie vorstehend beschrieben, erst nach weiterer Rotation der Ritzelkassette 5.

Aufgrunddessen ist der von der nach Outboard geschalteten Kettenführungsrolle 16 in deren Position 16ₒ auf das kleinere Zielritzel S₃' überlaufende Kettenabschnitt 6_{To} mit dessen Länge L_{So} in etwa gleich lang wie der zuvor zwischen der Kettenführungsrolle 16 und dem zu verlassenden Ritzel S₂' verlaufende Kettenabschnitt 6_{T} mit dessen Länge Lₛ.

Dies bedeutet mit anderen Worten, dass der Chain-Gap C_{Go} sowie die Länge L_{So} des überlaufenden Kettenabschnitts 6_{To} beim Outboard-Schalten Sₒ bedeutend größer ist als der Chain-Gap C_{Gi} sowie die Länge Lsi des überlaufenden Kettenabschnitts 6_{Ti} beim Inboard-Schalten Si.

Bei aktuellen, durchweg sog. indizierten Fahrradschaltungen erfolgt der horizontale Verfahrweg des Kettenkäfigs 13 und damit der Kettenführungsrolle 16 in Axialrichtung A_{R} im Wesentlichen in konstanten Schritten entsprechend der Abstände S der Ritzel der Ritzelkassette 5.

Mit diesem konstanten Absolutmaß S der axialen Auslenkung durch das Schaltwerk 4 bei jedem Schaltvorgang, in Kombination mit dem beim Outboard-Schaltvorgang Sₒ erheblich größeren Chain Gap C_{Go} bzw. mit der beim Outboard-Schaltvorgang Sₒ erheblich größeren Länge Lso des überlaufenden Kettenabschnitts 6_{To}, im Vergleich zu dem beim Inboard-Schaltvorgang Si erheblich kleineren Chain Gap C_{Gi} bzw. mit der beim Inboard-Schaltvorgang Si erheblich kleineren Länge Lsi des überlaufenden Kettenabschnitts 6_{Ti}, ergibt sich aufgrund trigonometrischer Verhältnisse beim Inboard-Schalten Si für den überlaufenden Kettenabschnitt 6_{Ti} somit ein Schräglaufwinkel λᵢ, der erheblich größer ist als der Schräglaufwinkel λ_{ο} des überlaufenden Kettenabschnitts 6_{To} beim Outboard-Schalten Sₒ.

Beim Einsatz einer oberen Kettenführungsrolle gemäß dem Stand der Technik, welche in Axialrichtung üblicherweise spiegelsymmetrisch zu ihrer Mittelebene P_{M} aufgebaut ist und damit identische seitliche Kettenführungseigenschaften entlang der Kettenrollen-Axialrichtung und gleiche Schräglaufwinkel λᵢ = λ_{ο} sowohl beim Inboard-Schalten Si als auch beim Outboard-Schalten Sₒ aufweist, führt der beim Inboard-Schalten Si erheblich kürzere überlaufende Kettenabschnitt 6_{Ti} bei gleichbleibendem Schräglaufwinkel λᵢ = λ_{ο} dieses überlaufenden Kettenabschnitts 6_{Ti} damit zu einer deutlich stärkeren Kettenrollen-axialen bzw. horizontalen Verlagerung des überlaufenden Kettenabschnitts Lsi und damit zu einer erheblich verstärkten und ggf. verfrühten Schaltwirkung auf das größere Ritzel Si, S₁' durch die Wirkung der Kettenrolle (vgl. Fig. 6). Denn eine Kettenrolle nach dem Stand der Technik würde den beim Inboard-Schalten Si auftretenden bzw. erforderlichen großen Schräglaufwinkel λᵢ des überlaufenden Kettenabschnitts 6_{Ti} nicht zulassen, sondern würde den überlaufenden Kettenabschnitt 6_{Ti} auf einen mehr geradlinigen Weg analog des Outboard-Schräglaufwinkels λ_{ο} zwingen, was zu verfrühtem Schalten auf das größere Ritzel S₁' führen würde.

Umgekehrt führt der beim Outboard-Schalten Sₒ im Vergleich zum Inboard-Schalten Si erheblich längere überlaufende Kettenabschnitt 6_{To} bei gleichbleibendem Schräglaufwinkel λ_{ο} = λᵢ dieses überlaufenden Kettenabschnitts 6_{To} mit einer axial symmetrischen Kettenführungsrolle aus dem Stand der Technik zu einer im Vergleich zum Inboard-Schalten Si geringeren Kettenrollen-axialen bzw. horizontalen Verlagerung des überlaufenden Kettenabschnitts 6_{To}, und damit zu einer im Vergleich zum InboardSchalten Si geringeren Schaltwirkung und zu einem vergleichsweise späteren Schalten auf das kleinere Ritzel S₃, S₃' (vgl. Fig. 7).

Der bei bekannten Kettenführungsrollen mit dem Outboard-Schräglaufwinkel λ_{ο} übereinstimmende Inboard-Schräglaufwinkel λᵢ und die daraus folgende stärkere Verlagerung des vergleichsweise kurzen überlaufenden Kettenabschnitts Lsi in Richtung auf das größere Zielritzel Si, S₁' führt also dazu, dass der überlaufende Kettenabschnitt Lsi mit bekannten Kettenführungsrollen früher bzw. stärker an der outboardseitigen Außenfläche 31_{F} (vgl. Fig. 6) des größeren Zielritzels Si, S₁' reibt, was unerwünscht zu einem verfrühten Schalten auf das größere Ritzel Si, S₁' an nicht zum Schalten vorgesehenen Stellen des größeren Ritzels Si, S₁' führen kann.

An den Ritzeln von Mehrfach-Ritzelkassetten befinden sich üblicherweise speziell gestaltete Ausnehmungen in Form von sog. Schaltgassen sowie spezielle Aufstiegszähne, an denen die Kette 6 beim Inboard-Schalten Sₒ vom kleineren Ritzel S₂, S₂' entlang eines exakt definierten, insbesondere näherungsweise tangential zwischen den beiden Ritzeln verlaufenden Weges auf das größere Ritzel Si, S₁' aufsteigen soll. Um Schaltfehler zu verhindern, muss die Kette 6 damit jedoch an allen anderen Zähnen des grö-ßeren Ritzels Si, S₁' seitlich entlang gleitend abgewiesen werden solange, bis die Kette 6 eine der Schaltgassen bzw. der Aufstiegszähne des größeren Ritzels S₁, S₁' erreicht.

Das seitliche Abweisen der Kette 6 an nicht zum Hochschalten vorgesehenen Zähnen des größeren Ritzels Si, S₁' beim Inboardschalten Si ist jedoch umso schwieriger, je größer der Gangsprung ist, je kleiner der Chain-Gap C_{Gi} und damit die Länge Lsi des überlaufenden Kettenabschnitts 6_{Ti} bei Schaltbeginn ist, und je mehr Zähne sich zwischen den entlang des Umfangs des größeren Ritzels Si, S₁' verteilten Schaltgassen bzw. Aufstiegszähnen des größeren Ritzels Si, S₁' befinden.

Eine besondere Herausforderung hinsichtlich des Abweisens der Kette 6 tritt dann auf, wenn sich, insbesondere bei Ritzelkassetten mit Dick-Dünn-Zähnen, die Kette 6 auf einem ungeradzahligen sog. Übergangsritzel 30 befindet und in definierter longitudinaler Ausrichtung synchronisiert auf das nächstgrößere, geradzahlige und Dick-Dünn-Zähne Tw, T_{N} aufweisende Ritzel 31 geschaltet werden muss dergestalt, dass die dünnen Zähne T_{N} des größeren Ritzels 30 in Innenlaschen-Kettenglieder IL und die dicken Zähne des größeren Ritzels 31 in Außenlaschen-Kettenglieder OL eingreifen. Eine derartige Schaltsituation ist beispielsweise aus Absatz [0085] i.V.m. Fig. 5 der DE102015016767A1 bekannt, und auch in der nachfolgend beschriebenen Fig. 5 dargestellt.

Fig. 5 zeigt zwei Ritzel 30, 31 einer Ritzelkassette 5 während eines Inboard-Schaltvorgangs Si, wobei das kleinere Ritzel 30 ein ungeradzahliges Übergangsritzel mit 21 Zähnen und das größere Ritzel 31 ein geradzahliges Ritzel mit Dick-Dünn-Zähnen Tw, T_{N} ist. Weiterhin erkennt man eine obere Kettenführungsrolle 16 eines nicht dargestellten Schaltwerks 4, sowie einen zwischen der Kettenführungsrolle 16 und dem ungeradzahligen Ritzel 30 überlaufenden Kettenabschnitt 6_{Ti}.

Bei der in Fig. 5ff. gezeigten Kette 6 handelt es sich um eine sog. Flat-Top-Kette, welche eine Oben-Unten-Asymmetrie besitzt, bezogen auf den montierten Zustand an einem Fahrrad. Die Oben-Unten-Asymmetrie besteht darin, dass vorzugsweise alle Kettenglieder, am Beispiel des Lasttrums 6_{L} der Kette 6 betrachtet (vgl. Fig. 2), an der Oberseite eine weitgehend flach bzw. gerade verlaufende Kontur aufweisen, während die Kettenglieder auf der Unterseite eine übliche, konkav gekrümmte Kontur besitzen. Derartige Flat-Top-Ketten haben insbesondere den Vorteil, bei unveränderten oder sogar verbesserten Lauf- und Schalteigenschaften eine höhere Stabilität aufzuweisen, da der gerade Verlauf der Oberseite der Kettenglieder zu einer Vergrößerung der Querschnittsfläche der Kettenglieder führt.

Die Zahngeometrie der erfindungsgemäßen Kettenführungsrolle 16 ist dabei vorzugsweise auf eine Flat-Top-Kette wie beispielsweise die in den Fig. 5ff. dargestellte Kette 6 abgestimmt, um den gewünschten unterschiedlichen Schräglaufwinkel der Kette 6 beim Ablauf des überlaufenden Kettenabschnitts 6_{Ti} von der Kettenführungsrolle 16 zu erzielen je nachdem, ob in Richtung Inboard (vgl. Fig. 6) oder Outboard (vgl. Fig. 7) geschaltet wird.

Die Zahngeometrie der Kettenführungsrolle 16 kann jedoch auch auf eine konventionelle Kette abgestimmt sein, die keine Oben-Unten-Asymmetrie aufweist. Auch ist es möglich, eine auf das Zusammenwirken mit einer Flat-Top-Kette hin optimierte Kettenführungsrolle 16 zusammen mit einer konventionellen Kette ohne Oben-Unten-Asymmetrie einzusetzen.

Auch dabei wird sich ein unterschiedlicher Schräglaufwinkel der Kette 6 beim Ablauf des überlaufenden Kettenabschnitts 6_{Ti} von der Kettenführungsrolle 16 beim Inboard-Schalten gegenüber dem Outboard-Schalten ergeben; dieser Unterschied wird jedoch je nach Geometrie und insbesondere je nach Krümmungsradius der bezogen auf das Lasttrum 6_{L} gemäß Fig. 2 oberen Begrenzung der Kettenglieder anders und möglicherweise kleiner oder auch größer als bei Verwendung einer Flat-Top-Kette ausfallen.

Es ist somit bevorzugt, die Kettenführungsrolle 16 auf die Geometrie der jeweils verwendeten Kette 6 abzustimmen, bzw die zur Verwendung mit der Kettenführungsrolle 16 jeweils vorgesehene Kette, also vorzugsweise eine Flat-Top-Kette, an dem Fahrrad zu montieren.

Bei dem geradzahligen, Dick-Dünn-Zähne aufweisenden größeren Ritzel 31 gemäß Fig. 5 sind die dicken Zähne Tw, welche aufgrund ihrer grö-ßeren Dicke in Ritzel-axialer Richtung nur in den Laschenzwischenraum von Außenlaschen-Kettengliedern LO, nicht jedoch in den Laschenzwischenraum von Innenlaschen-Kettengliedern LI passen und eingreifen können, durch schwarze Punkte gekennzeichnet. Die Bezugszeichen LO und LI sind in den Figuren direkt auf den jeweiligen Kettengliedern angegeben.

Das kleinere, ungeradzahlige Übergangsritzel 30 weist lediglich dünne Zähne T_{N} auf, da jeder Zahn des Übergangsritzels 30 aufgrund dessen ungerader Zähnezahl bei jeder Umdrehung abwechselnd in ein Innenlaschen-Kettenglied LI und in ein Außenlaschen-Kettenglied LO eingreift. Der Eingriff des überlaufenden Kettenabschnitts 6_{T} in das Übergangsritzel 30 in Fig. 5 führt bei der aktuellen Umdrehung des Ritzelpaars 30, 31 zu einem Eingriff der Außenlaschen-Kettenglieder OL in die jeweils mit einem Kreis gekennzeichneten Zähne des Übergangsritzels 30.

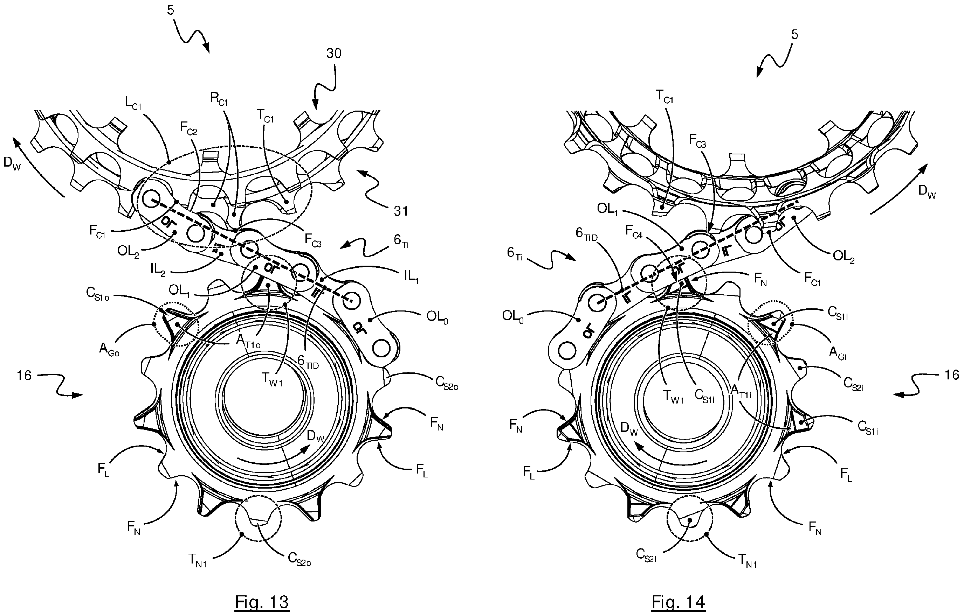

Das größere, geradzahlige Ritzel 31 weist an drei gleichmäßig voneinander beabstandeten Stellen, zwischen denen sich jeweils acht Zähne befinden, jeweils eine Inboard-Schaltgasse L_{C1}, L_{C2}, I,cs zum Aufstieg eines überlaufenden Kettenabschnitts 6_{Ti} beim Inboard-Schalten vom kleineren, ungeradzahligen Ritzel 30 auf das größere, geradzahligen Ritzel 31 auf. Die Inboard-Schaltgassen L_{C} umfassen Aufstiegsrampen R_{C1}, R_{C2}, R_{C3}, welche in Fig. 5 vom überlaufenden Kettenabschnitt 6_{T} teilweise verdeckt sind, deren Gestalt jedoch beispielsweise auch in Fig. 13 ersichtlich ist. Die Aufstiegsrampen Rc befinden sich in der outboardseitigen Stirnfläche des größeren Ritzels 31 und erlauben die anfängliche axiale Verlagerung des überlaufenden Kettenabschnitts 6_{T} bei der Einleitung des Inboard-Schaltens Si durch das Schaltwerk 4 (vgl. Fig. 3).

Weiterhin umfasst jede der drei Inboard-Schaltgassen L_{C1}, L_{C2}, L_{C3} des größeren Ritzels 31 jeweils einen Schaltzahn bzw. Fangzahn T_{C1} - T_{C3}, welcher jeweils spezielle Abschrägungen und Fasen aufweist, mit denen der jeweilige Fangzahn T_{C1} - T_{C3} in ein Außenlaschen-Kettenglied des überlaufenden Kettenabschnitts 6_{T} eingreift. Der Fangzahn Tc ist damit der erste Zahn des größeren Ritzels 31, welcher in die Kettenlaschen-Zwischenräume des überlaufenden Kettenabschnitts 6_{T} eingreift.

In der in Fig. 5 abgebildeten Situation hat der zeichnungsbezogen untenliegende überlaufende Kettenabschnitt 6_{Ti} soeben die Inboard-Schaltgasse L_{C1} mit dem dortigen Fangzahn T_{C1} (welcher in Fig. 5 durch ein Außenlaschen-Kettenglied OL des überlaufenden Kettenabschnitts 6_{Ti} verdeckt ist) passiert, und in demselben Moment wurde die Kettenführungsrolle 16 durch das Schaltwerk 4 um das Maß S (vgl. Fig. 4) nach Inboard verschoben, wodurch ein Inboard-Schaltvorgang Si eingeleitet wurde. Dabei wurde jedoch die zeichnungsbezogen unten befindliche Schaltgasse L_{C1} mit der dortigen Aufstiegsrampe R_{C1} und dem dortigen Fangzahn T_{C1} gerade verpasst, weshalb der überlaufende Kettenabschnitt 6_{Ti} nun so lange nicht auf das größere Ritzel 31 aufsteigen darf, bis der überlaufende Kettenabschnitt 6_{Ti} bei der weiteren Rotation D_{W} der Ritzelkassette 5 auf die nächste passende Schaltgasse L_{C} trifft.

Zwar erreicht nach einer Drittel-Umdrehung Dw der Ritzelkassette 5 die nächste Schaltgasse L_{C2} mit der dortigen Aufstiegsrampe R_{C2} und dem zugeordneten Fangzahn T_{C2} den überlaufenden Kettenabschnitt 6_{Ti}, was in Fig. 5 durch den um 120° gedreht nochmals abgebildeten überlaufenden Kettenabschnitt 6_{Ti}' angedeutet ist. An der Schaltgasse L_{C2} darf jedoch kein Schaltvorgang stattfinden, sondern der überlaufende Kettenabschnitt 6_{Ti}' muss vom größeren Ritzel 31 zunächst weiterhin seitlich nach Outboard abgewiesen werden (vgl. Fig. 6). Denn würde der überlaufende Kettenabschnitt 6_{Ti}' an dieser Stelle durch Eingriff in die dortige Schaltgasse L_{C2} mit der dortigen Aufstiegsrampe R_{C2} und mit dem dortigen Fangzahn T_{C2} auf das größere Ritzel 31 aufsteigen, dann würde sich ein desynchronisierter Lauf der Kette 6 auf dem geradzahligen, größeren Ritzel 31 ergeben. Dies erkennt man im Bereich der bei 6_{Ti}' befindlichen Schaltposition bzw. Schaltgasse L_{C2} daran, dass das Innenlaschen-Kettenglied IL dort auf den dicken Zahn T_{C2} des größeren Ritzels 31 treffen würde, und die Außenlaschen-Kettenglieder LO dementsprechend auf die dünnen Zähne des größeren Ritzels 31.

Ein desynchronisierter Lauf der Kette 6 auf einem geradzahligen Ritzel 31 mit Dick-Dünn-Zähnen T_{W}, T_{N} ist natürlich unerwünscht, da die Innenlaschen-Kettenglieder IL der Kette 6 dann auf den Zahnspitzen der dicken Zähne Tw aufreiten würden, was zu einer Unterbrechung der Drehmomentübertragung von der Kette 6 auf die Ritzelkassette 5 und damit zu einer möglicherweise gefährlichen Fahrsituation oder zu Schäden am Antriebsstrang 2 führen könnte.

Der überlaufende Kettenabschnitt 6_{Ti}' gemäß Fig. 5 darf also an der Schaltgasse L_{C2} mit der dortigen Aufstiegsrampe R_{C2} und dem dortigen Fangzahn T_{C2} noch nicht auf das größere Ritzel 31 aufsteigen, sondern der überlaufende Kettenabschnitt 6_{Ti} muss noch so lange an der outboardseitigen Stirnfläche 31_{F} (vgl. punktierte Linie 31_{F} in Fig. 6) des größeren Ritzels 31 gleitend vom Ritzel 31 abgewiesen werden, bis bei weiterer Rotation Dw der Ritzelkassette 5 in Fig. 5 links oben die dritte Schaltgasse I,cs mit der dortigen Aufstiegsrampe Rcs und dem dortigen Fangzahn T_{C3} erreicht wird.

Je nach Ritzelgröße stehen also pro Umdrehung der Ritzelkassette 5 unter Umständen nur wenige für den korrekten Schaltvorgang geeignete Drehwinkelpositionen der Kassette 5 zur Verfügung, ggf. nur eine passende Drehwinkelposition, oder, wie in dem Beispiel gemäß Fig. 5, zwei passende Drehwinkelpositionen mit dortigen Schaltgassen L_{C1} bzw. L_{C3}, an denen der jeweilige Aufstiegszahn T_{C1} bzw. Tcs auf ein Außenlaschen-Kettenglied OL der Kette 6 trifft.

Somit kann die Kette 6 bei einer Kassette mit Dick-Dünn-Zähnen Tw, Trr, selbst wenn das größere, geradzahlige Ritzel 31 eine Mehrzahl an Inboard-Schaltgassen L_{C} mit jeweils zugehörigem Aufstiegszahn Tc umfasst, welche aufgrund der abwechselnd dicken und dünnen Zähne einen grundsätzlich geradzahligen Zähneabstand voneinander aufweisen, ausgehend von einem ungeradzahligen Übergangsritzel 30 bestenfalls nur an jedem zweiten Aufstiegszahn Tc auf das geradzahlige größere Ritzel aufsteigen, da die auf einem ungeradzahligen Übergangsritzel 30 laufende Kette 6 nur bei jedem zweiten Aufstiegszahn Tc wie vorgesehen mit einem Außenlaschenglied OL auf den Aufstiegszahn Tc trifft.

Die Kette 6 muss in einem solchen, mit Fig. 5 übereinstimmenden Fall somit an einer besonders großen Anzahl von Zähnen des größeren Ritzels 31 abgewiesen werden, im vorliegenden Fall gemäß Fig. 5 nämlich an allen Zähnen innerhalb des zwei Drittel des Umfangs des größeren Ritzels 31 umfassenden Segments 31s, einschließlich des in diesem Segment 31s enthaltenen Fangzahns T_{C2}, um nicht an unerwünschter Position L_{C2} auf das größere Ritzel 31 aufzusteigen, was zu unsauberen Schaltvorgängen, erhöhter Belastung des Antriebsstrangs und unerwünschter Geräuschentwicklung bis hin zum Durchrutschen der Kette 6 auf der Ritzelkassette 5 und damit zur Beeinträchtigung der Fahrsicherheit führen kann.

Fig. 6 zeigt diesen Vorgang des Abweisens des vom ungeradzahligen Übergangsritzel bzw. Ausgangsritzel 30 auf das geradzahlige, größere Ritzel 31 überlaufenden Kettenabschnitts 6_{Ti} bei einem Inboard-Schaltvorgang Si. Man erkennt, dass die zeichnungsbezogen linksseitigen, also inboardseitigen Kettenglieder an der stirnseitigen Oberfläche 31_{F} des größeren Ritzels 31 gleiten und von diesem abgewiesen werden, also noch nicht in die Zähne des größeren Ritzels 31 eingreifen. Hierzu ist es erforderlich, dass der überlaufende Kettenabschnitt 6_{Ti} den in Fig. 6 mittels strichlierter Linie verdeutlichten, S-förmigen Verlauf 6_{TiC} einnehmen und unter einem verhältnismäßig großen Schräglaufwinkel λᵢ (vgl. Fig. 4) von der Kettenführungsrolle 16 zur Ritzelkassette 5 überlaufen kann. Würde der überlaufende Kettenabschnitt 6_{Ti} stattdessen auf einen weniger gekrümmten, mehr geradlinigen Verlauf gezwungen, so könnte der überlaufende Kettenabschnitt 6_{Ti} nicht mehr entlang des gesamten Kreissegments 31s gemäß Fig. 5 von den Zähnen des größeren Ritzels 31 abgewiesen werden, sondern könnte unerwünscht verfrüht und an falscher Stelle, zudem möglicherweise desynchronisiert, auf das größere Ritzel 31 aufsteigen.

Diese Zusammenhänge sind bei den vorliegend betrachtenden Schaltwerken 4 mit nicht oder nur wenig geneigtem Schaltparallelogramm 11 gemäß Fig. 1 bis 3 von besonderer Bedeutung, da bei derartigen Schaltwerken, wie weiter oben mit Bezug auf Fig. 2 bis 4 beschrieben, die Kettenführungsrolle 16 zu Beginn des Inboard-Schaltvorgangs Si vom Schaltwerk 4 lediglich horizontal verschoben wird. Die vertikale Verschiebung der Kettenführungsrolle 16 zur Wiederherstellung des erforderlichen Chain Gaps C_{G} hingegen erfolgt wie beschrieben erst im Anschluss an den Wechsel der Kette 6 auf das größere Ritzel Si, Si', 30, weshalb der überlaufende Kettenabschnitt 6_{Ti} beim Inboard-Schalten Si eine vergleichsweise geringe Länge Lsi aufweist, vgl. Fig. 2 bis 4.

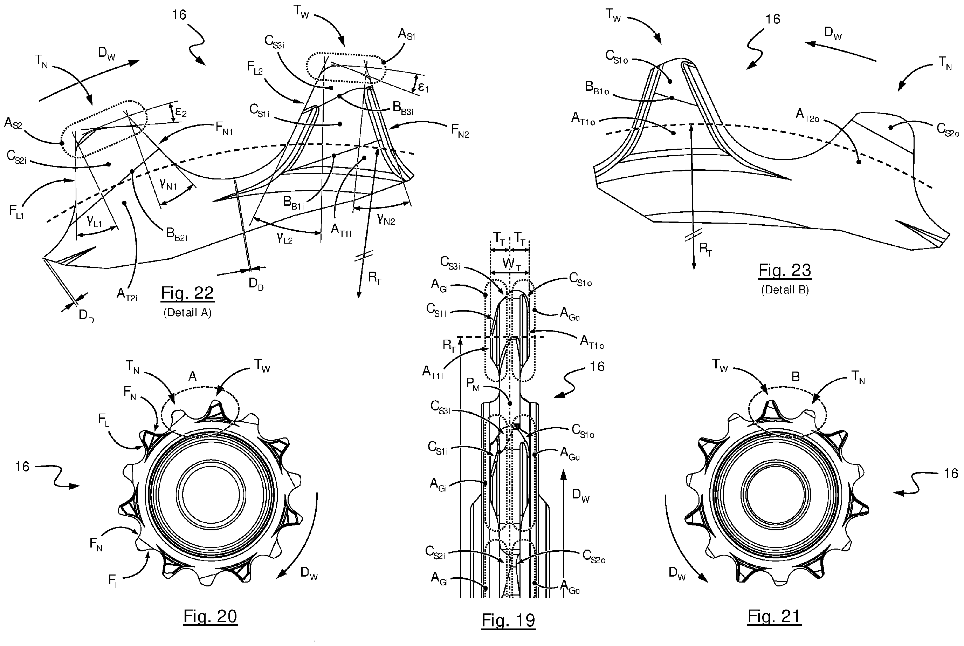

Unter diesen Bedingungen lässt sich mit einer Kettenführungsrolle nach dem Stand der Technik, deren Zahngeometrie im wesentlichen spiegelsymmetrisch zu einer Mittelebene P_{M} der Kettenführungsrolle 16 ist (vgl. Fig. 19), das für einen ordnungsgemäßen Schaltvorgang erforderliche Abweisen des überlaufenden Kettenabschnitts 6_{Ti} beim Inboard-Schalten Si nicht gewährleisten, da Kettenführungsrollen nach dem Stand der Technik aufgrund ihrer Symmetrie bezüglich ihrer Mittelebene beim InboardSchalten Si ebenso starke Kettenführungseigenschaften wie beim Outboard-Schalten Sₒ aufweisen.

Bezogen auf Fig. 6 würde dies bedeuten, dass der überlaufende Kettenabschnitt 6_{Ti} mit einer Kettenführungsrolle nach dem Stand der Technik, welche beim Inboard-Schalten Si eine starke Kettenführungseigenschaft besitzt, nicht den erforderlichen relativ stark gekrümmten Verlauf 6_{TiC} mit dem vergleichsweise großen Schräglaufwinkel λᵢ einnehmen könnte, und somit zum verfrühten Aufstieg auf das größere Ritzel 31 an nicht dafür vorgesehenen Drehwinkelpositionen bzw. Schaltgassen L_{C2} neigen würde.

Insgesamt ist demzufolge, insbesondere bei den in Rede stehenden Schaltwerken 4 mit nicht oder nur wenig geneigtem Schaltparallelogramm 11, und noch mehr bei der Kombination derartiger Schaltwerke 4 mit Ritzelkassetten 5 mit Dick-Dick-Dünn-Zähnen T_{W}, T_{N}, beim Inboard-Schaltvorgang Si ein erhöhter Schräglaufwinkel λᵢ des überlaufenden Kettenabschnitts 6_{Ti} und hierzu somit eine relativ schwache axiale Kettenführungseigenschaft der Kettenführungsrolle 16 wünschenswert, damit der überlaufende Kettenabschnitt 6_{Ti} nicht an einem nicht dafür vorgesehenen Zahn auf das größere Ritzel Si, Si', 30 aufsteigt, sondern stattdessen an allen nicht zum Aufstieg vorgesehenen Zähnen, vgl. bei 31s in Fig. 5, möglichst wirksam abgewiesen wird.

Gleichzeitig soll die Kettenführungsrolle 16 jedoch dafür sorgen, dass der überlaufende Kettenabschnitt 6_{To} beim Outboard-Schalten Sₒ, aufgrund der wie weiter oben insbesondere mit Bezug auf Fig. 3 und 4 beschriebenen größeren Länge Lso des überlaufenden Kettenabschnitts 6_{To}, vgl. auch Fig. 5, genügend stark ausgelenkt wird, damit der überlaufende Kettenabschnitt 6_{To} von einem der Abstiegszähne T_{D} des größeren Ritzels 31 erfasst, wie vorgesehen seitlich in Richtung Outboard abgewiesen und damit an der vorgesehenen Schaltposition auf das kleinere Ritzel 30 geleitet werden kann.

Diese Situation ist in Fig. 7 dargestellt. Bezüglich des gewünschten und gemäß Fig. 7 auch realisierten verhältnismäßig kleinen Schräglaufwinkels λ_{ο} des in Richtung Outboard überlaufenden Kettenabschnitts 6_{To}, der im Vergleich zur Länge Lsi des überlaufenden Kettenabschnitt 6_{Ti} beim Inboard-Schalten in Richtung Si gemäß Fig. 2 bis 5 eine verhältnismäßig große Länge L_{So} aufweist, wird insbesondere auch auf Fig. 4 hingewiesen, aus der zusammen mit dem zugehörigen Beschreibungsteil die Herleitung der unterschiedlichen Schräglaufwinkel λᵢ und λ_{ο} hervorgeht.

Die Kettenführungsrolle 16 gemäß der vorliegenden Erfindung erfüllt die vorstehend beschriebene Anforderungen nach einer starken seitlichen Kettenführungseigenschaft in Kettenrollen-axialer Richtung beim Outboard-Schalten Sₒ, in Kombination mit einer demgegenüber geringeren seitlichen Kettenführungseigenschaft beim Inboard-Schalten Si.

Dies wird bei der in den Figuren dargestellten Ausführungsform der Kettenführungsrolle 16 dadurch erreicht, dass die Zähne der Kettenführungsrolle 16 einen inboardseitigen Führungsbereich A_{Gi} und einen outboardseitigen Führungsbereich A_{Go} aufweisen, wobei der inboardseitige Führungsbereich A_{Gi} gegenüber dem outboardseitigen Führungsbereich A_{Go} eine bereichsweise reduzierte Dickenabmessung T_{T} relativ zu einer Mittelebene P_{M} der Kettenführungsrolle 16 aufweist (vgl. Fig. 19). In Fig. 6 und 7 sind derartige inboardseitige Führungsbereiche A_{Gi} und outboardseitige Führungsbereiche A_{Go} bereits erkennbar.

Anhand von Fig. 6 wird damit deutlich, dass der mit Lsi gekennzeichnete Teil des überlaufenden Kettenabschnitts 6_{Ti} den weiter oben beschriebenen, erforderlichen deutlich S-förmigen Verlauf 6_{TiC} mit dem verhältnismäßig großen Schräglaufwinkel λᵢ trotz der bereits horizontal nach Inboard geschalteten Kettenführungsrolle 16 hauptsächlich dadurch einnehmen kann, dass das Außenlaschen-Kettenglied OL₁ eine geringe seitliche Führung durch den inboardseitigen Führungsbereich A_{Gi} des dicken Zahns T_{W1} der Kettenführungsrolle 16 erfährt.

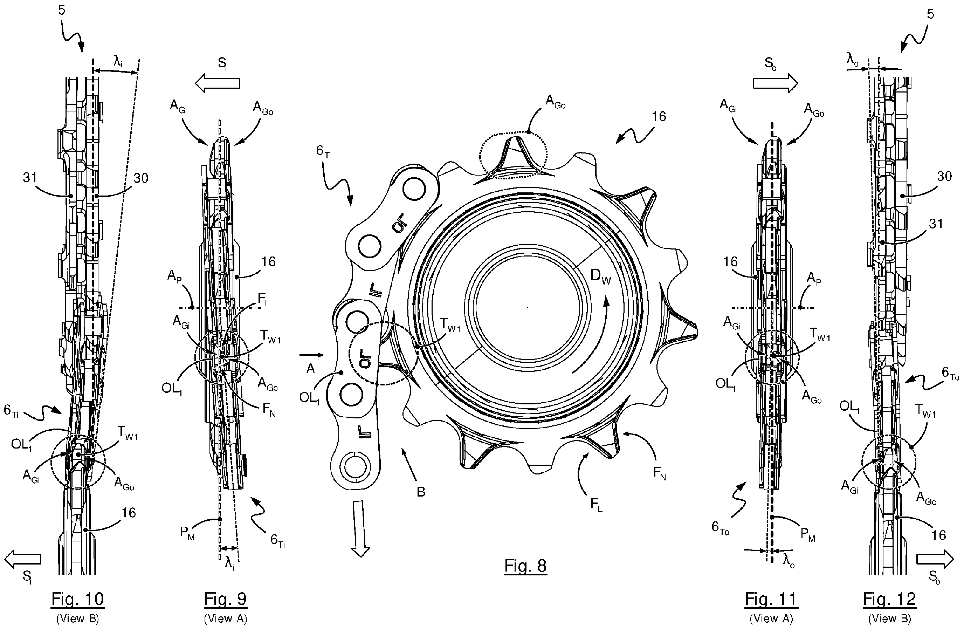

Fig. 8 bis 12 zeigen die Kettenführungsrolle 16 zusammen mit einem zwischen Kettenführungsrolle 16 und Ritzelkassette 5 überlaufenden Kettenabschnitt 6_{Ti} bzw. 6_{To} nochmals in verschiedenen Ansichten beim InboardSchalten (Fig. 9 und 10) bzw. beim Outboard-Schalten (Fig. 11 und 12).

In Fig. 8 ist die Kettenführungsrolle 16 und ein von der Kettenführungsrolle 16 zu der Ritzelkassette 5 überlaufender Kettenabschnitt 6_{T} mit Blickrichtung von der Outboardseite auf die Kettenführungsrolle 16 dargestellt. Dw bezeichnet wieder die Drehrichtung der Kettenführungsrolle 16 im Normalbetrieb, also beim antreibenden Betrieb eines Antriebsstrangs 2 gemäß Fig. 1 oder 2. Bei dem in Fig. 8 bis 12 durch ein strichliertes Oval markierten Zahn T_{W1} der Kettenführungsrolle 16 handelt es sich um einen dicken Zahn Tw der mit X-Sync-Zähnen, also mit abwechselnd dicken und dünnen Zähnen ausgeführten Kettenführungsrolle 16.

Fig. 9 und 10 zeigen einen überlaufenden Kettenabschnitt 6_{Ti} im Fall des Inboard-Schaltens von einem kleineren Ritzel 30 auf ein größeres Ritzel 31 aus den Fig. 8 entnehmbaren beiden Blickrichtungen A bzw. B. Fig. 11 und 12 zeigen entsprechend einen überlaufenden Kettenabschnitt 6_{To} beim Outboard-Schalten von einem größeren Ritzel 31 auf ein kleineres Ritzel 30.

Ähnlich wie in Fig. 6 erkennt man in Fig. 9 und 10, dass die Kettenführungsrolle 16 beim Inboard-Schalten Si wie gewünscht eine relativ geringe axiale Kettenführungseigenschaft aufweist und damit einen relativ großen Schräglaufwinkel λᵢ des überlaufenden Kettenabschnitts 6_{Ti} erlaubt, wodurch ein verfrühter Aufstieg des überlaufenden Kettenabschnitts 6_{Ti} auf das größere Ritzel 31 vermieden wird.

Entsprechend wird in Fig. 11 und 12, ähnlich wie in Fig. 7, erkennbar, dass die Kettenführungsrolle 16 beim Outboard-Schalten Sₒ die gewünschte relativ starke axiale Kettenführungseigenschaft besitzt, und damit zu einem relativ kleinen Schräglaufwinkel λ_{ο} des überlaufenden Kettenabschnitts 6_{Ti} beim Outboard-Schalten Sₒ führt.

Wie insbesondere Fig. 9 und 11 zeigen, wird dies wieder dadurch erreicht, dass die Zähne der Kettenführungsrolle 16 einen inboardseitigen Führungsbereich A_{Gi} und einen outboardseitigen Führungsbereich A_{Go} aufweisen, wobei der inboardseitige Führungsbereich A_{Gi} gegenüber dem outboardseitigen Führungsbereich A_{Go} eine bereichsweise reduzierte Dickenabmessung T_{T} (vgl. Fig. 19) relativ zu einer Mittelebene P_{M} der Kettenführungsrolle 16 aufweist. Insbesondere erlaubt die reduzierte Dickenabmessung des inboardseitigen Führungsbereichs A_{Gi} den gewünschten vergrößerten Schräglaufwinkel λᵢ beim Inboard-Schalten, wie in Fig. 6 sowie Fig. 9 und 10 gezeigt.

Die scheinbar unterschiedliche Größe jeweils derselben Schräglaufwinkel λᵢ, λ_{ο} in den Darstellungen der Fig. 4 und 6 bis 12 ergibt sich daraus, dass die Schräglaufwinkel λᵢ, λ_{ο} in den Figuren aus jeweils unterschiedlicher Richtung und Perspektive betrachtet werden.

Fig. 13 zeigt nochmals die Situation gemäß Fig. 5, in einer vergrößerten Ausschnittsdarstellung. Man erkennt wieder die beiden Ritzel 30, 31 einer Ritzelkassette 5, welche während eines Inboard-Schaltvorgangs gezeigt sind. Weiterhin erkennt man eine Kettenführungsrolle 16 eines nicht dargestellten Schaltwerks 4 sowie den zwischen der Kettenführungsrolle 16 und dem kleineren Ritzel 30 überlaufenden Kettenabschnitt 6_{Ti}. Fig. 14 zeigt die Situation gemäß Fig. 13 von der Rückseite, also von der Inboardseite her betrachtet.

Das strichlierte Oval L_{C1} entspricht demjenigen in Fig. 5 und markiert den Bereich der dort befindlichen Inboard-Schaltgasse L_{C1} des größeren Ritzels 31, welche insbesondere eine durch Ausnehmungen in der stirnseitigen Frontfläche des Ritzels 31 gebildete Aufstiegsrampe R_{C1} und einen zugeordneten Fangzahn T_{C1} umfasst. Der Fangzahn T_{C1} ist der erste Zahn des größeren Ritzels 31, welcher beim Inboard-Schaltvorgang Si in den Laschenzwischenraum der Kettenglieder des überlaufenden Kettenabschnitts 6_{Ti} eingreift.

Da sich Kettenführungsrolle 16, überlaufender Kettenabschnitt 6_{Ti} und Ritzelpaar 30, 31 in Fig. 13 und 14 in der Situation während eines Inboard-Schaltvorgangs Si befinden, wie er beispielsweise auch in Fig. 6 dargestellt ist, reiben die Kettenglieder IL, OL aufgrund der durch das Schaltwerk 4 bereits in die Ebene des größeren Ritzels 31 horizontal verschobenen Kettenführungsrolle 16 (vgl. Position 16i in Fig. 4) seitlich im Bereich von Kontaktflächen F_{C1}, F_{C2}, F_{C3} zwischen den Kettenlaschen und den Ritzelzähnen an den Zähnen der Ritzel 30, 31 (vgl. auch das reibende Gleiten des überlaufenden Kettenabschnitts 6_{Ti} an der outboardseitigen Außenfläche 31_{F} des größeren Ritzels 31 gemäß Fig. 6) sowie im Bereich der Kontaktfläche F_{C4} zwischen der dort anliegenden Kettenaußenlasche OL und einer inboardseitigen Fase C_{S1i} des dicken Zahns T_{W1} der Kettenführungsrolle 16.

Aufgrund dieser Reibungsvorgänge zwischen den Kettengliedern IL, OL des überlaufenden Kettenabschnitts 6_{Ti} gegenüber den Zähnen des Ritzelpaars 30 bzw. gegenüber den Zähnen der Kettenführungsrolle 16 verläuft der überlaufende Kettenabschnitt 6_{Ti} bei dem dargestellten Beispiel eines Inboard-Schaltvorgangs im abgebildeten Moment nicht exakt entlang der Tangente 6_{TiD} zwischen der Kettenführungsrolle 16 und dem kleineren Ritzel 30, sondern ist aufgrund dieser Reibungsvorgänge und der dabei entstehenden Kräfte in Radialrichtung, bezogen auf die Kettenführungsrolle 16 bzw. bezogen auf das Ritzelpaar 30, 31, gegenüber der Tangente 6_{TiD} geringfügig S-förmig ausgelenkt.

Bei weiterer Rotation entlang der Betriebsdrehrichtungen Dw von Kettenführungsrolle 16 und Ritzelpaar 30, 31 kommen die in Fig. 13 und 14 zeichnungsbezogen nach oben weisenden Kanten sowie die nach Inboard weisenden Flächen der inboardseitigen Kettenlaschen der Kettenglieder OL₁, IL₂ und OL₂ in Kontakt mit den entsprechenden Flächen und Fasen der Aufstiegsrampe R_{C1}, wodurch der finale Aufstieg des überlaufenden Kettenabschnitts 6_{Ti} auf das größere Ritzel 31 stattfindet. Dabei greift gleichzeitig der Fangzahn T_{C1} zwischen die Kettenlaschen des Außenlaschen-Kettenglieds OL₁ ein. Bei noch weitergehender Rotation entlang der Betriebsdrehrichtungen Dw von Kettenführungsrolle 16 und Ritzelpaar 30, 31 greift der überlaufende Kettenabschnitt 6_{Ti}, bzw. die nachfolgend auf das größere Ritzel 31 auflaufende Kette 6, sodann vollständig in das größere Ritzel 30 ein.

Aus Fig. 13 und 14 geht auch wieder die erfindungsgemäße unterschiedlich starke seitliche Kettenführungseigenschaft in Kettenrollen-axialer Richtung A_{P} (vgl. Fig. 9 und 11) der Kettenführungsrolle 16 hervor. Fig. 13 und 14 zeigen einen Inboard-Schaltvorgang, wie dieser beispielsweise auch in Fig. 6 gezeigt ist.

Die inboardseitig und outboardseitig unterschiedlich starke seitliche Kettenführungseigenschaft der Kettenführungsrolle 16 ist zunächst einmal auf die inboardseitig und outboardseitig unterschiedlich gestalteten Führungsbereiche A_{Gi} (inboardseitig) und A_{Go} (outboardseitig) insbesondere der dicken Zähne Tw der Kettenführungsrolle 16 zurückzuführen. Wie auch schon andeutungsweise Fig. 9 und 11 zu entnehmen, weisen inboardseitiger Führungsbereich A_{Gi} und outboardseitiger Führungsbereich A_{Go} zumindest der dicken Zähne Tw der Kettenführungsrolle 16 zumindest bereichsweise unterschiedliche Dickenabmessungen auf in der Form, dass insbesondere die in Fig. 13 bzw. Fig. 14 ersichtlichen Fasenflächen C_{S1i} (inboardseitig) und C_{S1o} (outboardseitig) unterschiedlich groß ausgebildet, bzw. relativ zu der jeweiligen stirnseitigen Zahnoberfläche A_{T1i} (inboardseitig) und A_{T1o} (outboardseitig) des dicken Zahns Tw unterschiedlich stark zurückgenommen sind.

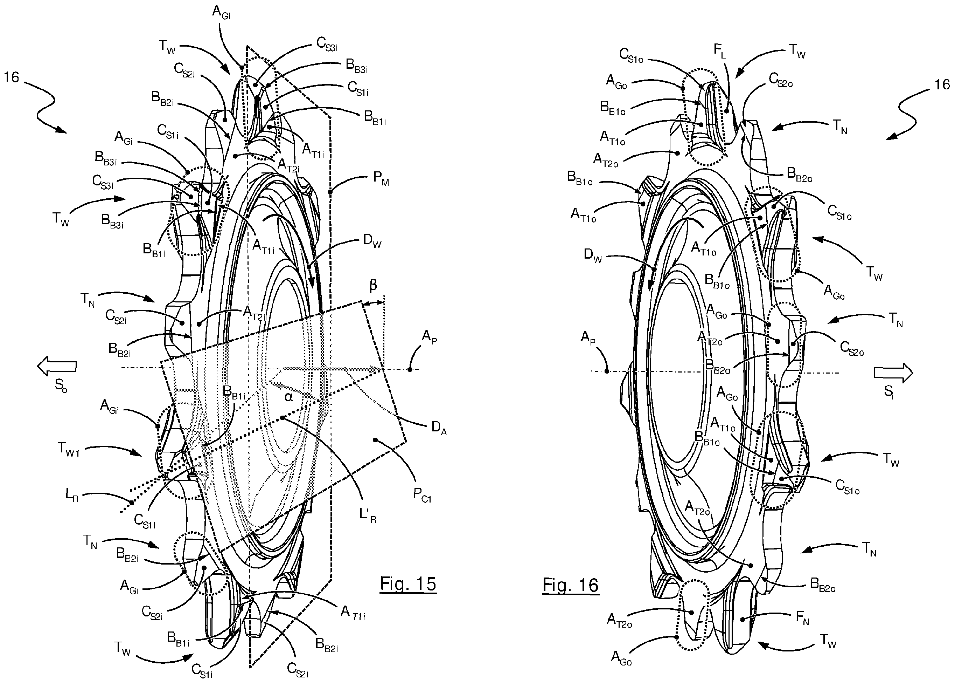

Wie auch in Fig. 15 und 16 dargestellt und weiter unten im Detail beschrieben, sind die outboardseitigen Fasenflächen C_{S1o}, und in deutlich stärkerem Maß die inboardseitigen Fasenflächen C_{S1i} so gestaltet, insbesondere räumlich so geneigt, dass die inboardseitig geringere Dickenabmessung der dicken Zähne Tw, welche für die reduzierte Kettenführungseigenschaft in Kettenrollen-axialer Richtung der Kettenführungsrolle 16 primär verantwortlich ist, am Zahnfuß bei A_{T1i} (inboardseitig) und A_{T1o} (outboardseitig) noch nicht wirksam ist.

Dies bedeutet mit anderen Worten, dass die Kette 6, solange diese sich noch nicht als überlaufender Kettenabschnitt 6_{Ti} allmählich von der Kettenführungsrolle 16 löst, sondern noch im vollständigen Eingriff mit der Kettenführungsrolle 16 steht, was in Fig. 13 und 14 beispielsweise für das Außenlaschen-Kettenglied OL₀ gilt, in Kettenrollen-axialer Richtung A_{P} (vgl. Fig. 9 und 11) sowohl inboardseitig als auch outboardseitig von der Kettenführungsrolle 16 mit im Wesentlichen gleich starker, unverminderter seitlicher Kettenführungseigenschaft geführt wird. Dies ist vorteilhaft, da hiermit eine sichere Führung der Kette 6 auf der Kettenrolle gewährleistet ist, insbesondere unerwünschte seitliche Bewegungen der Kette 6 auf der Kettenführungsrolle 16 ebenso wie unerwünschte Desynchronisierungen der Kette 6 bei einer Kettenführungsrolle 16 mit X-Sync Zähnen, also mit abwechselnd dicken Zähnen Tw und dünnen Zähnen T_{N}, reduziert werden.

Die reduzierte seitliche Kettenführungseigenschaft in Kettenrollen-axialer Richtung A_{P} (vgl. Fig. 9 und 11) der Kettenführungsrolle 16 wirkt vielmehr erst auf den überlaufenden Kettenabschnitt 6_{Ti}, wenn also beim InboardSchalten Si die Außenlaschen-Kettenglieder OL sich allmählich von der Kettenführungsrolle 16 lösen. Im dargestellten Moment gemäß Fig. 13 und 14 betrifft dies die Situation am dicken Zahn T_{W1}. Man erkennt in Fig. 14, wie die inboardseitige Fasenfläche C_{S1i} des dicken Zahns T_{W1} ihre reduzierte seitliche Kettenführungseigenschaft entfaltet, indem und während das Außenlaschen-Kettenglied OL1 sich allmählich in Kettenrollen-radialer Richtung von dem dicken Zahn T_{W1} löst.

Ein ähnlicher Zeitpunkt beim Inboard-Schalten Si gemäß Fig. 13 und 14 ist auch in Fig. 5 und 6 dargestellt. In Zusammenschau mit Fig. 5 ist auch in Fig. 6 erkennbar, wie die inboardseitige Kettenlasche des Außenlaschen-Kettenglieds OL1 sich in Kettenrollen-radialer Richtung vom dicken Zahn T_{W1} löst, wodurch es dem überlaufenden Kettenabschnitt 6_{Ti} möglich wird, entsprechend dem in Fig. 6 eingezeichneten S-förmigen Verlauf 6_{TiC} Richtung Outboard, zeichnungsbezogen also nach rechts auszuweichen, und somit verfrühtes Hochschalten auf das größere Ritzel 31 zu vermeiden.

In Fig. 13 und 14 erkennt man weiterhin, dass auch die dünnen Zähne T_{N} der Kettenführungsrolle 16 so ausgeführt sind, dass ein inboardseitiger Führungsbereich C_{S2i} gegenüber einem outboardseitigen Führungsbereich C_{S2o} des jeweiligen dünnen Zahns T_{N1} eine zumindest bereichsweise reduzierte Dickenabmessung relativ zu einer Mittelebene P_{M} (vgl. Fig. 16) der Kettenführungsrolle 16 aufweist dergestalt, dass der von der Kettenführungsrolle 16 im Wesentlichen tangential ablaufende Kettenabschnitt 6_{Ti} in Outboardrichtung einen größeren Schräglaufwinkel einnehmen kann als in Inboardrichtung.

Bei den dünnen Zähnen T_{N} wird dies beim dargestellten Ausführungsbeispiel der Kettenführungsrolle 16 dadurch erreicht, dass die inboardseitigen, schrägen Fasenflächen C_{S2i} gegenüber den entsprechenden outboardseitigen Fasenflächen C_{S2o} größer und weiter in Richtung Mittelebene P_{M} der Kettenführungsrolle 16 zurückgenommen ausgebildet sind. Hierdurch führen die inboardseitigen Fasenflächen C_{S2i} gegenüber den outboardseitigen Fasenflächen C_{S2o} zu einer im Bereich dieser Fasenflächen reduzierten Dickenabmessung T_{T} (vgl. Fig. 19) des jeweiligen dünnen Zahns T_{N1}. Diese Zusammenhänge sind ebenfalls Fig. 15, 16 und 18 sowie Fig. 24 bis 26 zu entnehmen.

Auch sind diese Fasenflächen C_{S2i} und C_{S2o} wieder so schräg im Raum angeordnet, dass diese die jeweils auf die Kette 6 wirksame Dicke des jeweiligen dünnen Zahns T_{N} erst dann reduzieren, wenn das jeweilige Innenlaschen-Kettenglied IL sich allmählich in Kettenrollen-radialer Richtung von dem dünnen Zahn T_{N} löst und damit Teil des von der Kettenführungsrolle 16 auf die Ritzelkassette 5 überlaufenden Kettenabschnitts 6_{T} wird.

Die Ausbildung der inboardseitigen Führungsbereiche A_{Gi}, Csi und der outboardseitigen Führungsbereiche A_{Go}, Cso der dicken und dünnen Zähne Tw und T_{N} des Ausführungsbeispiels für eine Kettenführungsrolle 16 gemäß Fig. 4 bis 23, insbesondere die räumliche Anordnung der entsprechenden Fasenflächen, geht im Detail aus Fig. 15 und 16 hervor.

Fig. 15 zeigt die Kettenführungsrolle 16 gemäß Fig. 4 bis 23 in einer perspektivischen Darstellung schräg von vorne mit Blick auf die Inboardseite, in Fig. 16 ist die Kettenführungsrolle 16 gemäß Fig. 4 bis 23 in einer perspektivischen Darstellung schräg von vorne mit Blick auf die Outboardseite gezeigt.

Zunächst wird am Beispiel des dicken Zahns T_{W1} erläutert, auf welche Weise der inboardseitige Führungsbereich A_{Gi} (Fig. 15) des dicken Zahns T_{W1} die gegenüber dem outboardseitigen Führungsbereich A_{Go} (Fig. 16) des dicken Zahns T_{W1} zumindest bereichsweise reduzierte Dickenabmessung T_{T} (vgl. Fig. 19) erhält, die für die inboardseitig verringerte Kettenführungseigenschaft der dicken Zähne Tw der Kettenführungsrolle 16 sorgt.

Man erkennt, dass inboardseitiger Führungsbereich A_{Gi} und outboardseitiger Führungsbereich A_{Go} des dicken Zahns T_{W1} jeweils als erhabene Verdickungen ausgebildet sind, welche insbesondere im Bereich einer inboardseitigen Seitenfläche A_{T1i} bzw. im Bereich einer outboardseitigen Seitenfläche A_{T1o} des Zahns T_{W1} angeordnet sind, bzw. die diese Bereiche A_{T1i}, A_{T1o} jeweils bilden.

Weiterhin erkennt man, dass der inboardseitige Führungsbereich A_{Gi} gegenüber dem outboardseitigen Führungsbereich A_{Go} zumindest bereichsweise eine reduzierte Dickenabmessung relativ zu einer gedachten Mittelebene P_{M} der Kettenführungsrolle 16 aufweist. Beim dargestellten Ausführungsbeispiel der Kettenführungsrolle 16 wird dies dadurch erreicht, dass die inboardseitige Seitenfläche A_{T1i} des dicken Zahns Twi eine räumlich abgeschrägte Fasenfläche C_{S1i} erhält. Die Fasenfläche C_{S1i} ist so am Zahn Twi angeordnet und ausgerichtet, dass durch die Fasenfläche C_{S1i} eine Fasen-Ebene P_{C1} definiert ist.

Die Fasen-Ebene P_{C1} ist relativ zu der Mittelebene P_{M} der Kettenführungsrolle 16 zunächst einmal entlang der Axialrichtung D_{A} der Kettenführungsrolle 16 um einen Winkel a verkippt angeordnet. Durch diese Verkippung a der Fasen-Ebene P_{C1} wird eine radial innere Begrenzungskante B_{B1i} der Fasenfläche C_{S1i} definiert, mit der die Fasenfläche C_{S1i} an die inboardseitige Seitenfläche A_{T1i} des Zahns T_{W1} angrenzt.

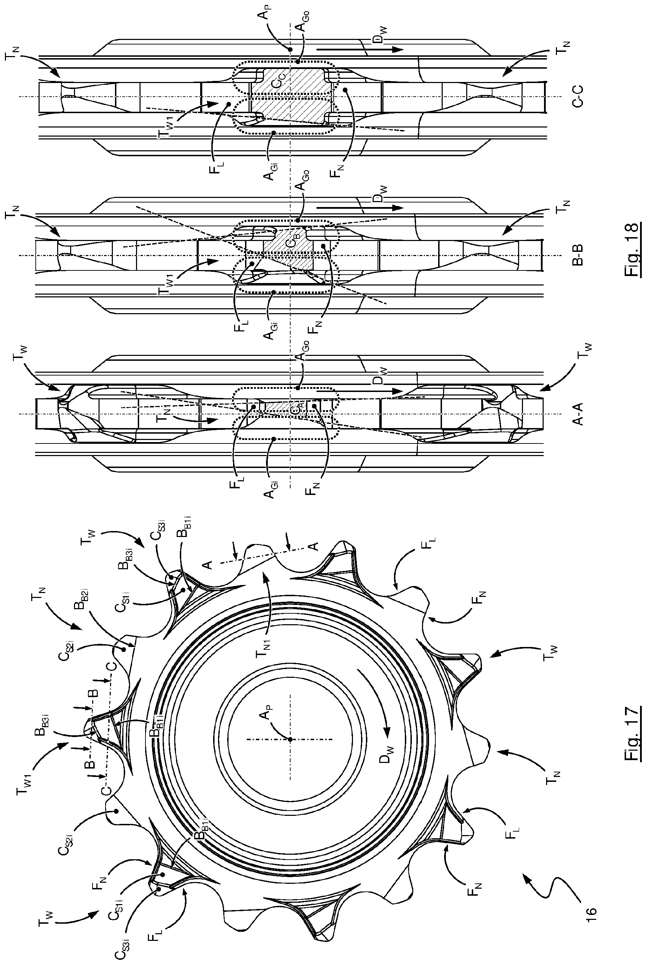

Zusätzlich zu der Verkippung a entlang der Axialrichtung D_{A} ist die die Fasenfläche C_{S1i} definierende Fasen-Ebene P_{C1} des Zahns T_{W1} beim dargestellten Ausführungsbeispiel auch um eine dem Zahn T_{W1} zugeordnete Kettenrollen-Radiallinie L_{R} gegenüber der Kettenrollen-Mittelebene P_{M} um einen Winkel β verschwenkt. Diese weitere Verschwenkung β führt dazu, dass die radial innere Begrenzungskante B_{B1i} der Fasenfläche C_{S1i} einen entlang einer Betriebsdrehrichtung Dw der Kettenführungsrolle 16 nach radial außen ansteigenden Verlauf erhält, und dass der Zahn T_{W1} zumindest im Bereich der Fasenfläche C_{S1i} eine von der Zahn-Nichtlastflanke F_{N} zu der Zahn-Lastflanke F_{L} hin abnehmende Dicke W_{T} aufweist, vgl. hierzu Fig. 17 bis 19 und die zugehörige Beschreibung.

Die zusätzliche Verschwenkung β ist in Fig. 15 der besseren Darstellbarkeit halber relativ zu der bereits um den Winkel a verkippten Fasen-Ebene P_{C1}, und damit relativ zu der gegenüber der Kettenrollen-Radiallinie L_{R} ebenfalls entsprechend verkippten Geraden L'_{R} eingezeichnet. Dasselbe Ergebnis, insbesondere dieselbe Lage der Fasen-Ebene P_{C1} wird erhalten, wenn diese zuerst um den Winkel β um die Kettenrollen-Radiallinie L_{R} geschwenkt und anschließend um den Winkel a entlang der Axialrichtung D_{A} der Kettenführungsrolle 16 verkippt wird.

In ähnlicher Weise wie die vorstehend beschriebene Anordnung und räumliche Positionierung der Fasenfläche C_{S1i}, insbesondere unter Verkippung um einen Winkel a entlang einer Axialrichtung D_{A} der Kettenführungsrolle 16 und unter zusätzlicher Verschwenkung um eine dem jeweiligen Zahn T zugeordnete Kettenrollen-Radiallinie L_{R}, L'_{R} gegenüber einer Kettenrollen-Mittelebene P_{M} um einen Winkel β definieren sich bei dem in Rede stehenden Ausführungsbeispiel der Kettenführungsrolle 16 auch weitere Fasenflächen an den Zähnen Tw und T_{N}.

Dies gilt insbesondere für die inboardseitigen Fasenflächen C_{S2i} mit deren radial inneren Begrenzungskanten B_{B2i} gegenüber den jeweiligen stirnseitigen Zahnoberflächen Arzt an den dünnen Zähnen T_{N}. Auch die outboardseitigen Fasenflächen C_{S1o} der dicken Zähne Tw mit deren radial inneren Begrenzungskanten B_{B1o} gegenüber den jeweiligen stirnseitigen Zahnoberflächen A_{T1o} sowie die outboardseitigen Fasenflächen C_{S2o} der dünnen Zähne T_{N} mit deren radial inneren Begrenzungskanten B_{B2o} gegenüber den jeweiligen stirnseitigen Zahnoberflächen A_{T2o} sind auf analoge Weise definiert, positioniert und räumlich schräg angeordnet wie vorstehend für die Fasenfläche C_{S1i} beschrieben.

Beim dargestellten Ausführungsbeispiel der Kettenführungsrolle 16 sind weiterhin auch die zusätzlichen inboardseitigen Fasenflächen C_{S3i} der dicken Zähne Tw auf analoge Weise konstruiert bzw. definiert.

Insgesamt bedeutet dies, dass die radial inneren Begrenzungskanten B_{B1i}, B_{B2i}, B_{B3i}, B_{B1o}, B_{B2o} sämtlicher geneigter Fasenflächen C_{S1i}, C_{S2i}, C_{S3i}, C_{S1o}, C_{S2o} der Kettenführungsrolle 16 einen entlang der Betriebsdrehrichtung Dw der Kettenführungsrolle 16 nach radial außen ansteigenden Verlauf aufweisen.

Der nach radial außen ansteigende Verlauf der inboardseitigen Begrenzungskanten B_{B1i}, B_{B2i}, B_{B3i} sowie die zugehörigen Fasenflächen C_{S1i}, C_{S2i}, Cₛ₃ᵢ der Kettenführungsrolle 16 gehen weiterhin auch aus Fig. 17 hervor, welche die Kettenführungsrolle 16 in inboardseitiger Seitenansicht zeigt.

In Fig. 17 sind zudem die Schnittebenen A - A, B - B und C - C angegeben, welche den Schnittflächen C_{A}, C_{B}, Cc in Fig. 18 zugrunde liegen, und es sind die Lastflanken F_{L} und die Nichtlastflanken F_{N} der dicken Zähne Tw und der dünnen Zähne T_{N} bezeichnet. Zur Unterscheidung zwischen Lastflanke F_{L} und Nichtlastflanke F_{N} bei einer Kettenführungsrolle 16 wird auch auf Fig. 5 sowie Fig. 13 und Fig. 14 verwiesen.

Dort wird erkennbar, dass als Lastflanke F_{L} bei einer Kettenführungsrolle 16 diejenige Zahnflanke definiert ist, welche die antreibende Kraft von der Kette 6 in Betriebsdrehrichtung Dw der Kettenführungsrolle 16 auf die Kettenführungsrolle 16 überträgt. Als Nichtlastflanke F_{N} ist dementsprechend die der Lastflanke gegenüberliegende Zahnflanke definiert.

Anhand der in Fig. 18 geschnitten dargestellten dicken Zähne T_{W1} und des ebenfalls geschnitten dargestellten dünnen Zahns T_{N1} wird erkennbar, dass die vorstehend anhand Fig. 15 bis 17 beschriebene Gestaltung der inboardseitigen Führungsbereiche A_{Gi} sowie outboardseitigen Führungsbereiche A_{Go} der dicken Zähne Tw und der dünnen Zähne T_{N} mit deren räumlich geneigten inboardseitigen sowie outboardseitigen Fasenflächen C_{S1i}, C_{S2i}, Cₛ₃ᵢ, C_{S1o}, C_{S2o} auch dazu führt, dass insbesondere die inboardseitigen Führungsbereiche A_{Gi}, und zumindest bereichsweise auch die outboardseitigen Führungsbereiche A_{Go}, zumindest im Bereich der jeweiligen Fasenflächen C_{S1i}, C_{S2i}, Cₛ₃ᵢ, C_{S1o}, C_{S2o}, eine von der Lastflanke F_{L} des Zahns T hin zu dessen Nichtlastflanke F_{N} zunehmende Dicke aufweisen.

Auch dies kommt einer während des Schaltvorgangs möglichst gleichmäßigen und vibrationsarmen Führung des von der Kettenführungsrolle 16 auf die Ritzelkassette 5 überlaufenden Kettenabschnitts 6_{Ti} bzw. 6_{To} möglichst entlang der gesamten Breite der Zähne T in Umfangsrichtung der Kettenführungsrolle 16 zugute, da der überlaufende Kettenabschnitt 6_{Ti} bzw. 6_{To} auf einem schräg in Betriebsdrehrichtung Dw, also von der Lastflanke F_{L} hin zu der Nichtlastflanke F_{N} der Zähne T der Kettenführungsrolle 16 zunehmenden Kontaktradius R_{T} (vgl. Fig. 22) der Kettenführungsrolle 16 mit der Kettenführungsrolle 16 in Kontakt steht, wie beispielsweise anhand Fig. 5 bis 7 bzw. Fig. 9 und 11 ersichtlich.

Dieser schräg verlaufende Kontakt des die Kettenführungsrolle 16 verlassenden Kettenabschnitts 6_{Ti} bzw. 6_{To} wird somit begünstigt und entlang der Breite der Zähne T in Umfangsrichtung der Kettenführungsrolle 16 vergleichmäßigt dadurch, dass die Dicke der Führungsbereiche A_{Gi}, A_{Go}, und somit die zur Kettenführung wirksame Dicke W_{T} (vgl. Fig. 19) der Zähne T der Kettenführungsrolle 16 von der Nichtlastflanke F_{N} hin zur Lastflanke F_{L} der Zähne T abnimmt. Dies ermöglicht auch eine Vergleichmäßigung der seitlichen Führung sowohl der Innenlaschen-Kettenglieder LI als auch der Außenlaschen-Kettenglieder LO des überlaufenden Kettenabschnitts 6_{Ti} bzw. 6_{To} mit möglichst gleichbleibendem Schräglaufwinkel λᵢ bzw. λₒ.

Fig. 19 bis 23 zeigen nochmals wesentliche Geometrieeigenschaften der Kettenführungsrolle 16 bzw. der inboardseitigen und outboardseitigen Führungsbereiche A_{Gi} und A_{Go}, der inboardseitigen und outboardseitigen Fasenflächen C_{S1i}, C_{S2i}, C_{S3i}, C_{S1o} und C_{S2o} sowie deren Begrenzungskanten B_{B1i}, B_{B2i}, B_{B3i}, B_{B1o} und B_{B2o} gegenüber den jeweiligen stirnseitigen Zahnoberflächen A_{T1i}, A_{T2i}, A_{T1o}, A_{T2o} der dicken und dünnen Zähne T_{W} und T_{N}.

In den vergrößerten Detailausschnitten gemäß Fig. 22 und 23 werden insbesondere wieder die in Umfangsrichtung der Kettenführungsrolle 16 schräg verlaufenden Begrenzungskanten B_{B1i}, B_{B2i}, B_{B3i}, B_{B1o} und B_{B2o} der inboardseitigen und outboardseitigen Fasenflächen C_{S1i}, C_{S2i}, C_{S3i}, C_{S1o} und C_{S2o} erkennbar, die sich aufgrund der räumlich um Winkel α und β verkippt angeordneten Fasenflächen C_{S1i}, C_{S2i}, C_{S3i}, C_{S1o} und C_{S2o} ergeben, wie diese weiter oben unter Bezugnahme auf Fig. 15 beschrieben sind.

Wie bereits weiter oben unter Bezugnahme auf Fig. 6 sowie 13 und 14 ausgeführt, führt diese verkippte Anordnung der Fasenflächen C_{S1i}, C_{S2i}, Cₛ₃ᵢ, C_{S1o} und C_{S2o} mit dem sich daraus ergebenden schrägen Verlauf der Begrenzungskanten B_{B1i}, B_{B2i}, B_{B3i}, B_{B1o} und B_{B2o} dazu, dass die Kettenglieder des überlaufenden Kettenabschnitts 6_{T} bei deren allmählichem Verlassen der Kettenführungsrolle 16 (siehe z.B. Kettenglied OLi in Fig. 5 bis 14) eine gleichmäßig abnehmende Führung in Kettenrollen-axialer Richtung A_{P} erfahren.

Aufgrund der im Bereich der inboardseitigen Führungsbereiche A_{Gi} im Vergleich zu den outboardseitigen Führungsbereichen A_{Go} deutlich stärker zurückgenommenen Dickenabmessung der Zähne Tw und T_{N}, mit anderen Worten aufgrund der inboardseitig stärker angefasten stirnseitigen Zahnoberflächen A_{T1i}, A_{T2i}, A_{T1o}, A_{T2o} der dicken und dünnen Zähne T_{W} und T_{N}, vgl. Fig. 15 und 16, führt dies wie beschrieben insgesamt inboardseitig zu einer deutlich geringeren seitlichen Kettenführungseigenschaft der Kettenführungsrolle 16 in Kettenrollen-axialer Richtung A_{P}, im Vergleich zu der outboardseitigen seitlichen Kettenführungseigenschaft der Kettenführungsrolle 16, vgl. Fig. 4 und Fig. 6 bis 14 sowie die zugehörigen Beschreibungsteile.

Diese inboardseitig und in geringerem Maße auch outboardseitig reduzierte Kettenführungseigenschaft wirkt jedoch wie beschrieben nur auf diejenigen Kettenglieder des zwischen der Kettenführungsrolle 16 und der Ritzelkassette 5 überlaufenden Kettenabschnitts 6_{Ti} bzw. 6_{To}, welche sich bereits teilweise von der Kettenführungsrolle 16 gelöst haben, vgl. insbesondere das Kettenglied OLi in Fig. 5 bis 14. Diejenigen Kettenglieder, die noch vollständig auf der Kettenführungsrolle 16 laufen, vgl. beispielsweise Kettenglieder OL₀ und IL₁ in Fig. 13 und 14, erfahren hingegen sowohl outboardseitig als auch inboardseitig eine vollständige und unverminderte seitliche Führung in Kettenrollen-axialer Richtung A_{P}.

Die in geringerem Maße als beim Inboard-Schalten auch beim Outboard-Schalten (vgl. insbesondere Fig. 7) reduzierte Kettenführungseigenschaft auf diejenigen Kettenglieder, des überlaufenden Kettenabschnitts 6_{To}, welche sich bereits teilweise von der Kettenführungsrolle 16 gelöst haben (vgl. Kettenglied OLi in Fig. 7) dient dazu, dass das Abrutschen des überlaufenden Kettenabschnitts 6_{To} von den Zahnspitzen der Kettenführungsrolle 16 beim Outboard-Schaltvorgang zwar möglichst spät erfolgen soll, was einer starken Kettenführungseigenschaft entspricht, gleichzeitig jedoch auch gleichmäßig und vibrationsarm erfolgen soll, damit ein durch etwaige Vibrationen hervorgerufenes Abrutschen der des überlaufenden Kettenabschnitts 6_{To} von einer rückseitigen Ausnehmung an der Verzahnung der Ritzelkassette 5 verhindert wird. Außerdem wird durch die auch outboardseitig reduzierte Kettenführungseigenschaft zumindest im Bereich der Zahnspitzen das Desynchronisieren oder Abrutschen der Kette 6 von der Kettenführungsrolle 16 beim Rückwärtsdrehen des Antriebsstrangs 2 reduziert bzw. unterbunden.

Auch dies wird ermöglicht durch die verkippte Anordnung der Fasenflächen C_{S1i}, C_{S2i}, Cₛ₃ᵢ, C_{S1o} und C_{S2o} mit dem sich daraus ergebenden schrägen Verlauf der Begrenzungskanten B_{B1i}, B_{B2i}, B_{B3i}, B_{B1o} und B_{B2o}, da hierdurch an den dicken und dünnen Zähnen Tw und T_{N} jeweils Bereiche A_{T1i}, A_{T2i}, A_{T1o}, A_{T2o} der stirnseitigen Zahnoberflächen erhalten bleiben, welche die vollständige, unverminderte Dickenabmessung aufweisen. Letzteres geht insbesondere aus Fig. 19 in Zusammenschau mit Fig. 22 und 23 hervor. Man erkennt in Fig. 19 unter Berücksichtigung von Fig. 22, dass insbesondere die dicken Zähne Tw in einem inboardseitigen Flächenbereich C_{S1i} außerhalb eines Übergangsradius R_{T} eine reduzierte Dickenabmessung T_{T} aufweisen, während die inboardseitige Dickenabmessung T_{T} der dicken Zähne Tw innerhalb des Übergangsradius R_{T} zumindest in dem Flächenbereich A_{T1i} nicht reduziert ist.

Analog, jedoch in geringerem Ausmaß gilt dies auch für den inboardseitigen Flächenbereich C_{S2i} der dünnen Zähne T_{N} sowie, in noch weiter reduziertem Ausmaß, für die outboardseitigen Flächenbereiche Csio der dicken Zähne Tw und für die outboardseitigen Flächenbereiche C_{S2o} der dünnen Zähne T_{N}. In allen diesen Fällen besitzen die Führungsbereiche A_{Gi} bzw. A_{Go} der Zähne Tw und T_{N} jeweils ihre vollständige Dickenabmessung T_{T}, soweit die noch vollständig auf der Kettenführungsrolle 16 laufenden Kettenglieder betroffen sind (vgl. z.B. Kettenglieder OLo und IL₁ in Fig. 13 und 14), während die Führungsbereiche A_{Gi} bzw. A_{Go} der Zähne Tw und T_{N} vorwiegend inboardseitig in den Flächenbereichen C_{S1i}, und C_{S2i}, in geringerem Maße jedoch auch outboardseitig in den Flächenbereichen Csio, und C_{S2o}, eine bereichsweise reduzierte Dickenabmessung T_{T} aufweisen, soweit bereits teilweise von der Kettenführungsrolle 16 gelöste Kettenglieder betroffen sind (vgl. z.B. Kettenglied OLi in Fig. 5 bis 14).

Auf diese Weise kann die effektive Zahndicke W_{T} gemäß Fig. 19 insbesondere der dicken Zähne Tw, welche die Synchronisation der Kette 6 auf der Kettenführungsrolle 16 bewirkt, trotz der insbesondere in Inboardrichtung Sᵢ reduzierten Kettenführungseigenschaft der Kettenführungsrolle 16 (vgl. Fig. 6 bis 12) unvermindert groß sein. Je größer der Radius R_{T} gewählt wird, auf dem die kritische effektive Zahndicke liegt, auf dem also die Zahndicke W_{T} der dicken Zähne Tw größer wird als die Innenweite der Innenlaschen-Kettenglieder, desto wirksamer wird dabei die Kette 6 auf der Kettenführungsrolle 16 synchronisiert, und desto weniger sensibel ist die Synchronisierung auch gegen verschleißbedingte Änderungen der Zahnform oder gegenüber einem geringen Umschlingungswinkel der Kette 6 um die Kettenführungsrolle 16, vgl. die Ausführungen zum Umschlingungswinkel in der Beschreibungseinleitung sowie die entsprechende Darstellung in Fig. 2.

Durch die verkippte Anordnung der Fasenflächen C_{S1i}, C_{S2i} und C_{S3i}, insbesondere durch deren räumliche Neigung mit dem sich daraus ergebenden schrägen Verlauf der Begrenzungskanten B_{B1i}, B_{B2i} und B_{B3i}, welche der Kettenauslaufslinie 6_{TiD} folgt (vgl. Fig. 14), kann somit gleichzeitig der Kettenüberlauf 6_{Ti} insbesondere beim Warten auf eine Inboard-Schaltgasse (vgl. Fig. 5 und 6 sowie zugehörige Beschreibung) möglichst gleichmäßig und vibrationsarm erfolgen, und der effektive Radius R_{T} zur Synchronisierung der Dick-Dünn-Zähne Tw, T_{N} der Kettenführungsrolle 6 mit der Kette 6 kann möglichst groß sein.

Aufgrund der unvermindert starken Kettenführungseigenschaft der Dick-Dünn-Zähne Tw, T_{N} der erfindungsgemäßen Kettenführungsrolle 16 für diejenigen Kettenglieder, welche noch vollständig auf der Kettenführungsrolle laufen, kann die Kette 6 somit auch bei geringerer Umschlingung um die Kettenführungsrolle 16 noch gut geführt und synchronisiert werden. Die erfindungsgemäße Kettenführungsrolle 16 kann somit beispielsweise auch längere Zähne und damit noch bessere Kettenführungseigenschaften erhalten, als dies bei einer Kettenführungsrolle nach dem Stand der Technik, also ohne die erfindungsgemäß axial asymmetrische Gestaltung der Zähne T möglich wäre, da bei der erfindungsgemäßen Kettenführungsrolle 16 die Kette 6 beim Inboard-Schalten Sᵢ weniger stark auf das jeweils größere Ritzel gezwungen wird (vgl. Fig. 5 und 6 sowie die zugehörige Beschreibung).

In Fig. 22 erkennt man ferner die Flankenwinkel γ_{L1}, γ_{L2} der Lastflanken F_{L1}, F_{L2} sowie die Flankenwinkel γ_{N1}, γ_{N2} der Nichtlastflanken F_{N1}, F_{N2} der dünnen Zähne T_{N} bzw. der dicken Zähne T_{W}. Bei dem in Rede stehenden Ausführungsbeispiel der Kettenrolle 16 sind die Flankenwinkel γ_{L1}, γ_{L2} der Lastflanken F_{L1}, F_{L2} der Zähne T_{N}, T_{W} jeweils flacher als die Flankenwinkel γ_{N1}, γ_{N2} der Nichtlastflanken F_{N1}, F_{N2}. Zudem sind beide Flankenwinkel γ_{L1}, γ_{N1} der dünnen Zähne T_{N} jeweils flacher als die entsprechenden beiden Flankenwinkel γ_{L2}, γ_{N2} der dicken Zähne Tw. Bevorzugte Werte für die Flankenwinkel der dünnen Zähne T_{N} bzw. der dicken Zähne Tw liegen bei γ_{L1} = 24,77° und γ_{N1} = 24,20° bzw. γ_{L2} = 23,88° und γ_{N2} = 23,34°. Der Lastflankenwinkel γ_{L1} der dünnen Zähne T_{N} ist flacher als der Lastflankenwinkel γ_{L2} der dicken Zähne Tw, da die dünnen Zähne T_{N} nicht zur Synchronisation beitragen, sondern im Fall einer etwaigen Desynchronisation von der Kette 6 nur überwunden werden müssen, um die gewünschte Synchronisation wiederherzustellen.

Weiterhin in Fig. 22 erkennbar sind Bereiche A_{S1}, A_{S2} um die Zahnspitzen der dicken Zähne T_{W} bzw. der dünnen Zähne T_{N}. Man erkennt, dass die Zahnspitzen der Zähne T_{W}, T_{N} in den Bereichen A_{S1}, A_{S2} jeweils eine Neigung ε₁, ε₂ aufweisen, die überwiegend hin zu der jeweiligen Nichtlastflanke F_{N1}, F_{N2} des jeweiligen Zahns T_{N}, Tw abfällt.

Das unerwünschte Desynchronisieren der Kette 6 auf einer Kettenführungsrolle 16 mit Dick-Dünn-Zähnen Tw, T_{N} tritt häufiger bzw. vorwiegend beim Rückwärts-Treten auf. Um dies zu verhindern bzw. zu reduzieren, sind die Flankenwinkel γ_{N1}, γ_{N2} der Nichtlastflanken F_{N1}, F_{N2} (die beim Rückwärtstreten zu Lastflanken werden) jeweils steiler als die Flankenwinkel γ_{L1}, γ_{L2} der Lastflanken F_{L1}, F_{L2} der Zähne T_{N} und Tw.

Demselben Zweck dienen die jeweils zu der Nichtlastflanke F_{N1}, F_{N2} abfallenden Bereiche A_{S1}, A_{S2} um die Zahnspitzen der Zähne Tw, T_{N}. Auch diese führen dazu, dass unerwünschte Desynchronisation der Kette 6 auf der Kettenführungsrolle 16 vermindert wird, und dass im Falle der Desynchronisation die auf der Kettenführungsrolle 16 laufende Kette 6 rasch wieder in den synchronen Lauf auf der Kettenführungsrolle 16 gebracht wird.

Insbesondere die zur Nichtlastflanke F_{N1}, F_{N2} abfallende Zahnspitzenbereiche A_{S1}, A_{S2} führen dazu, dass eine etwa desynchronisierte und damit auf den Zahnflanken bzw. Zahnspitzen der Kettenführungsrolle 16 nach radial außen aufreitende Kette 6 ein Relativdrehmoment zwischen Kette 6 und Kettenführungsrolle 16 erzeugt, welches dazu führt, dass die Kettenführungsrolle 16 sich relativ zur Kette 6 dreht solange, bis die Kette 6 wieder in den synchronisierten Eingriff mit der Kettenführungsrolle 16 gelangt und sich dort stabilisiert.

Gemäß Fig. 22 ist auch der Abstand D_{D} in Umfangsrichtung zwischen der Zahnteilung der Zähne Tw und T_{N} möglichst kurz. Dies bedeutet im Umkehrschluss, dass die jeweiligen Zahnbreiten der Zähne Tw und T_{N} der Kettenführungsrolle 16 in Umfangsrichtung möglichst lang gewählt sind.

Auch dies begünstigt zusammen mit kürzeren dünnen Zähnen T_{N}, welche im Übergangsbereich zwischen Zahnspitze und Lastflanke stark verrundet sind, und zusammen mit den an den dicken und dünnen Zähnen T_{W} und T_{N} zur Nichtlastflanke F_{N} abfallenden Zahnspitzen, das Synchronisieren der Kette 6.

Insgesamt wird somit die Synchronisierung der Kette 6 auf der Kettenführungsrolle 16 verbessert, so dass die Kette 6 bei einer möglichen Desynchronisation bereits durch Fortführung des Kettenlaufs in Betriebsdrehrichtung Dw selbsttätig und schnellstmöglich wieder synchronisiert wird, ohne dass der Nutzer spezielle Handlungen durchführen muss, wie beispielsweise Rückwärtstreten bis zur Resynchronisation. Der nicht synchrone Lauf der Kette 6 auf der Kettenführungsrolle 16 und die selbsttätige Resynchronisation sind während dieser kurzen Phase für den Nutzer kaum wahrnehmbar.

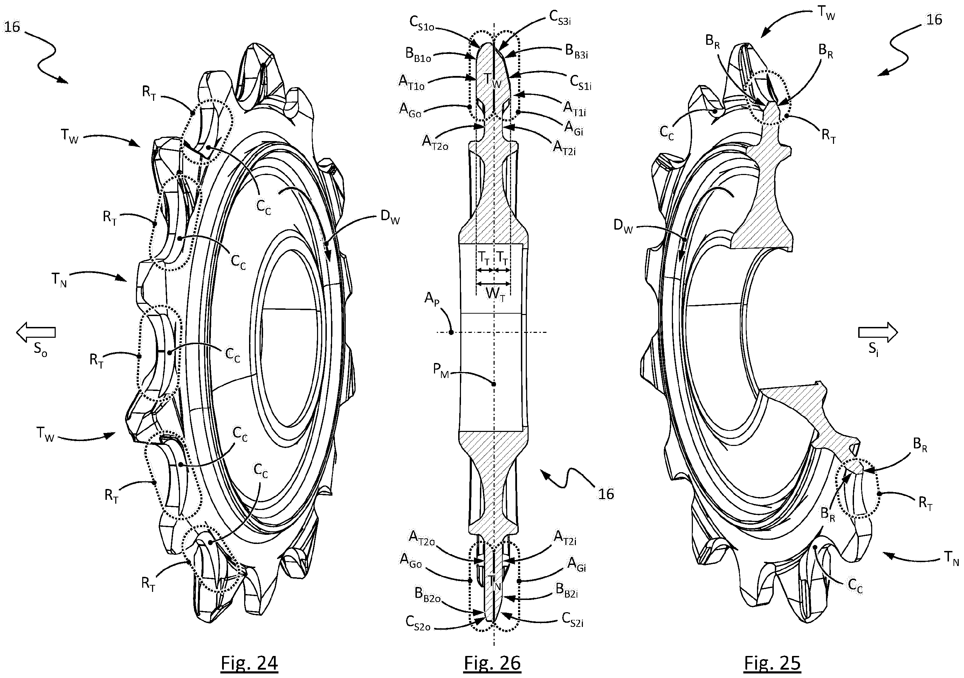

Fig. 24 bis 26 zeigen eine weitere Ausführungsform einer erfindungsgemäßen Kettenführungsrolle 16. Die Ausführungsform gemäß Fig. 24 bis 26 stimmt in praktisch allen Details der Verzahnung, insbesondere soweit diese erfindungsgemäß auf der Inboardseite und auf der Outboardseite unterschiedlich ausgeführt sind, mit der Ausführungsform gemäß Fig. 4 bis 23 überein.

Die Ausführungsform gemäß Fig. 24 bis 26 unterscheidet sich gegenüber der vorgenannten Ausführungsform lediglich darin, dass bei der Ausführungsform gemäß Fig. 24 bis 26 im Bereich des Zahnübergangs bzw. Zahngrunds R_{T} zwischen einigen, vorzugsweise allen Zähnen Tw, T_{N} sowohl outboardseitig Sₒ als auch inboardseitig Sᵢ eine Fase Cc angebracht ist. Mittels der Fase Cc lässt sich eine Selbstreinigungsfähigkeit der Kettenführungsrolle 16 erreichen bzw. verbessern, indem unerwünschte Ablagerungen von Schmutz, oder bei Winterbetrieb insbesondere von Eis, im Bereich des Zahngrunds R_{T} verringert bzw. vermieden werden dadurch, dass der Zahngrund R_{T} aufgrund der Fasen Cc verschmälert und damit der Gestalt einer Schneide angenähert wird.

Dies ist insbesondere in der Schnittdarstellung gemäß Fig. 25 erkennbar, welche auch zeigt, dass die beidseitig, also sowohl auf der Inboardseite Sᵢ und auf der Outboardseite Sₒ angebrachten Fasen Cc zu einer entsprechenden beidseitigen Abschrägung B_{R} im Bereich des Zahngrunds R_{T} zwischen den Zähnen Tw, T_{N} führen. Weiterhin in Fig. 25 erkennbar sind die drei für die vorliegende Offenbarung wesentlichen Bereiche der Kettenführungsrolle 16, nämlich der Lagerbereich R_{B} zur Aufnahme einer Lageranordnung wie beispielsweise eines Kugellagers, der Zahnbereich R_{T} mit den daran ausgebildeten Zähnen Tw, T_{N} zum Eingriff in die Kette 6, sowie eine den Lagerbereich R_{B} und den Zahnbereich R_{T} verbindende Tragstruktur Ss.

Fig. 26 zeigt die Kettenführungsrolle 16 gemäß Fig. 24 und 25 in einer weiteren Schnittdarstellung. Die Schnittfläche verläuft hier durch die Achse A_{P} der Kettenführungsrolle 16 und schneidet im zeichnungsbezogen oberen Bereich einen dicken Zahn Tw, sowie im zeichnungsbezogen unteren Bereich einen dünnen Zahn T_{N}. Ähnlich wie in Fig. 19 wird auch in Fig. 26 die Asymmetrie der Verzahnung der Kettenführungsrolle 16 zwischen den inboardseitigen Führungsbereichen A_{GI} und den outboardseitigen Führungsbereichen A_{GO} erkennbar. Würde die Ausführungsform der Kettenführungsrolle 16 gemäß Fig. 4 bis 23 in der aus Fig. 26 hervorgehenden Weise geschnitten, so ergäbe sich dasselbe Schnittbild wie in Fig. 26. Dies bedeutet in anderen Worten, dass die Darstellung gemäß Fig. 26 für beide Ausführungsformen der Kettenführungsrolle sowohl gemäß Fig. 4 bis 23 als auch gemäß Fig. 24 bis 26 gilt.

Hinsichtlich der Beschreibung der in Fig. 26 erkennbaren Flächen C_{S1o}, C_{S2o}, C_{S1i}, C_{S2i}, C_{S3i} und Fasen B_{B1o}, B_{B2o}, B_{B1i}, B_{B2i}, Bast der Verzahnung in den inboardseitigen Führungsbereichen A_{GI} und den outboardseitigen Führungsbereichen A_{Go} wird auf die Beschreibung insbesondere zu Fig. 15 und 16 weiter oben verwiesen.

Die erfindungsgemäße Kettenführungsrolle 16 kann weiterhin auch als Kettenspannrolle 15 (vgl. Fig. 2) oder in anderen Bereichen eines Fahrrad-Antriebsstrangs, insbesondere in der Nähe des Tretlagers B_{B} (vgl. Fig. 1 und 2) als sog. Idler Pulley eingesetzt werden. Idler Pulleys werden an Fahrrädern, insbesondere an Mountainbikes mit Hinterbaufederung eingesetzt, um dem Lasttrum der Kette einen besonderen, gewünschten Verlauf in der Umgebung des Tretlagers bzw. in der Nähe der Anlenkung der Hinterbaufederung zu geben, oder um das Leertrum der Kette sicherer bzw. näher an der Hinterbaustrebe zu führen, und damit ein Schlagen oder Abspringen der Kette zu verhindern.

Auch in diesen Fällen kann eine in Outboardrichtung Sₒ und Inboardrichtung Sᵢ unterschiedlich starke Führungswirkung der Kettenspannrolle 15 bzw. des Idler Pulley wünschenswert sein, was sich durch eine Kettenführungsrolle 16 gemäß der vorliegenden Offenbarung realisieren lässt.

Beim Einsatz als Idler Pulley im Lasttrum der Kette 6 wird die Kettenführungsrolle 16 dabei bevorzugt in einer Metallbauweise ausgeführt, während ein Idler Pulley im Leertrum der Kette 6 vorzugsweise in Kunststoff ausgeführt wird, ähnlich wie es zumeist bei dem weiter oben beschriebenen Einsatz im Fahrradschaltwerk 4 der Fall ist.

## Patentansprüche

1. Kettenführungsrolle (16) für einen Fahrrad-Antriebsstrang (2) mit einer Kette (6), mit einer Mehrfach-Ritzelanordnung (5) und mit einem hinteren Fahrrad-Schaltwerk (4), die Kettenführungsrolle (16) umfassend einen um eine Rotationsachse (A_{P}) rotierbaren Lagerbereich (R_{B}), einen Zahnbereich (R_{T}) mit daran ausgebildeten Zähnen (T) für den Eingriff in die Kette (6), sowie eine den Lagerbereich (R_{B}) und den Zahnbereich (R_{T}) verbindende Tragstruktur (Ss), wobei an zumindest einem Zahn (T) an dessen inboardseitigen und outboardseitigen Seitenflächen (A_{T}) jeweils Führungsbereiche (A_{G}) zur seitlichen Führung der Kette (6) im Wesentlichen parallel zur Rotationsachse (A_{P}) ausgebildet sind,
**dadurch gekennzeichnet,**
**dass** zumindest ein inboardseitiger Führungsbereich (A_{Gi}) gegenüber zumindest einem outboardseitigen Führungsbereich (A_{Go}) des zumindest einen Zahns (T) eine zumindest bereichsweise reduzierte Dickenabmessung (T_{T}) relativ zu einer Mittelebene (P_{M}) der Kettenführungsrolle (16) aufweist dergestalt, dass ein von der Kettenführungsrolle (16) im Wesentlichen tangential ablaufender Kettenabschnitt (6ₜ) in Outboardrichtung (Sₒ) einen größeren Schräglaufwinkel (λᵢ) einnehmen kann als in Inboardrichtung (Sᵢ).

2. Kettenführungsrolle nach Anspruch 1,
**dadurch gekennzeichnet,**
**dass** zumindest ein Führungsbereich (A_{Gi}, A_{Go}) eine erhabene Verdickung umfasst, welche im Bereich einer inboardseitigen Seitenfläche (A_{T1i}) oder einer outboardseitigen Seitenfläche (A_{T1o}) des zumindest einen Zahns (T) angeordnet ist.

3. Kettenführungsrolle nach Anspruch 1 oder 2,
**dadurch gekennzeichnet,**
**dass** zumindest ein Führungsbereich (A_{Gi}, A_{Go}) des zumindest einen Zahns (T) zumindest bereichsweise eine mit zunehmendem Abstand von der Rotationsachse (A_{P}) abnehmende Dicke (T_{T}) aufweist.

4. Kettenführungsrolle nach einem der Ansprüche 1 bis 3,
**dadurch gekennzeichnet,**
**dass** zumindest ein Bereich abnehmender Dicke (T_{T}) des zumindest einen Führungsbereichs (A_{Gi}, A_{Go}) des zumindest einen Zahns (T) als Fasenfläche (Cs) ausgebildet ist, durch welche eine Fasen-Ebene (Pc) definiert ist, die relativ zu einer Kettenführungsrollen-Mittelebene (P_{M}) entlang einer Axialrichtung (D_{A}) um einen Winkel (α) verkippt angeordnet ist dergestalt, dass durch die Verkippung eine radial innere Begrenzungskante (B_{B}) der Fasenfläche (Cs) gegenüber einer Seitenfläche (A_{T}) des zumindest einen Zahns (T) definiert ist.

5. Kettenführungsrolle nach Anspruch 4,
**dadurch gekennzeichnet,**
**dass** die zumindest eine Fasen-Ebene (Pc) und damit die zumindest eine Fasenfläche (Cs) des zumindest einen Zahns (T) um eine dem zumindest einen Zahn (T) zugeordnete Kettenrollen-Radiallinie (L_{R}, L'_{R}) gegenüber der Kettenrollen-Mittelebene (P_{M}) um einen Winkel (β) verschwenkt ist dergestalt, dass die radial innere Begrenzungskante (B_{B}) der Fasenfläche (Cs) einen entlang einer Betriebsdrehrichtung (Dw) der Kettenführungsrolle (16) nach radial außen ansteigenden Verlauf erhält, und/oder dergestalt, dass der Führungsbereich (A_{Gi}, A_{Go}) zumindest im Bereich der Fasenfläche (Cs) eine von der Lastflanke (F_{L}) des Zahns (T) hin zu dessen Nichtlastflanke (F_{N}) zunehmende Dicke (T_{T}) aufweist.

6. Kettenführungsrolle nach einem der Ansprüche 1 bis 5,
**dadurch gekennzeichnet,**
**dass** ein Flankenwinkel (γ_{L}) der Lastflanke (F_{L}) des zumindest einen Zahns (T) flacher ist als ein Flankenwinkel (γ_{N}) der Nichtlastflanke (F_{N}) des zumindest einen Zahns (T).

7. Kettenführungsrolle nach einem der Ansprüche 1 bis 6,
**dadurch gekennzeichnet,**
**dass** ein Bereich (As) um die Zahnspitze des zumindest eines Zahns (T) eine Neigung (ε) überwiegend hin zu der Nichtlastflanke (F_{N}) des Zahns (T) aufweist.

8. Kettenführungsrolle nach einem der Ansprüche 1 bis 7,
**dadurch gekennzeichnet,**
**dass** die Kettenführungsrolle (16) eine geradzahlige Vielzahl von Zähnen (T) aufweist, die in Umfangsrichtung alternierend jeweils einer ersten oder einer zweiten Zahngruppe zugeordnet sind, wobei die Zähne der ersten Zahngruppe schmale Zähne (T_{N}) sind, die schmaler sind als ein Ketteninnenlaschenabstand, und wobei die zweite Zahngruppe zumindest einen breiten Zahn (Tw) umfasst, der breiter ist als ein Ketteninnenlaschenabstand, so dass der zumindest eine breite Zahn (T_{W}) nur in den Laschenzwischenraum eines Außenlaschen-Kettenglieds (OL), jedoch nicht in den Laschenzwischenraum eines Innenlaschen-Kettenglieds (IL) vollständig eintauchen kann.

9. Kettenführungsrolle nach Anspruch 8,
**dadurch gekennzeichnet,**
**dass** zumindest ein Zahn (T_{N}) der ersten Zahngruppe gegenüber zumindest einem Zahn (Tw) der zweiten Zahngruppe eine reduzierte Zahnhöhe in Radialrichtung aufweist.

10. Kettenführungsrolle nach einem der Ansprüche 1 bis 9,
**dadurch gekennzeichnet,**
**dass** einer oder beide Flankenwinkel (γ_{L1}, γ_{N1}) zumindest eines Zahns (T_{N}) der ersten Zahngruppe flacher ist als der entsprechende Flankenwinkel (γ_{L2}, γ_{N2}) zumindest eines Zahns (T_{W}) der zweiten Zahngruppe.

11. Hinteres Fahrrad-Schaltwerk,
umfassend ein mit einem Fahrrad-Hinterbaurahmen (7) verbindbares Basiselement (10), ein mittels einer Schwenkanordnung (11) gegenüber dem Basiselement (10) bewegbares Schaltungselement (12) sowie eine mit dem Schaltungselement (12) schwenkbar verbundene Kettenführungseinrichtung (13) mit einer oberen Kettenführungsrolle (16) und einer unteren Kettenspannrolle (15),
**gekennzeichnet durch**
eine obere Kettenführungsrolle (16) gemäß einem der Ansprüche 1 bis 10.

12. Fahrrad-Antriebsstrang,
umfassend zumindest ein vorderes Kettenrad (3), eine hintere Mehrfach-Ritzelanordnung (5) sowie ein hinteres Schaltwerk (4) mit einer oberen Kettenführungsrolle (16) und einer unteren Kettenspannrolle (15),
**dadurch gekennzeichnet,**
**dass** das hintere Schaltwerk (4) eine obere Kettenführungsrolle (16) gemäß einem der Ansprüche 1 bis 10 umfasst.

13. Fahrrad-Antriebsstrang nach Anspruch 12,
**dadurch gekennzeichnet,**
**dass** die Mehrfach-Ritzelanordnung (5) zumindest ein Ritzel (31) mit einer geradzahligen Vielzahl von Zähnen (T) aufweist, die in Umfangsrichtung alternierend jeweils einer ersten oder einer zweiten Zahngruppe zugeordnet sind, wobei die Zähne der ersten Zahngruppe schmale Zähne (T_{N}) sind, die schmaler sind als ein Ketteninnenlaschenabstand, und wobei die zweite Zahngruppe zumindest einen breiten Zahn (T_{W}) umfasst, der breiter ist als ein Ketteninnenlaschenabstand, so dass der zumindest eine breite Zahn (Tw) nur in den Laschenzwischenraum eines Außenlaschen-Kettenglieds (OL), jedoch nicht in den Laschenzwischenraum eines Innenlaschen-Kettenglieds (IL) vollständig eintauchen kann.

14. Fahrrad-Antriebsstrang nach Anspruch 12 oder 13,
**dadurch gekennzeichnet,**
**dass** das hintere Schaltwerk ein Straight-Pin-Schaltwerk (4) mit nicht oder nur geringfügig geneigtem Schaltparallelogramm (11) ist.

## Claims

1. Chain-guiding roller (16) for a bicycle drivetrain (2) having a chain (6), having a multi-pinion arrangement (5) and having a rear bicycle gearshift mechanism (4), the chain-guiding roller (16) comprising a bearing region (R_{B}) rotatable about an axis of rotation (A_{P}), a tooth region (R_{T}) with teeth (T) formed thereon for engaging into the chain (6), and a supporting structure (Ss) that connects the bearing region (R_{B}) and the tooth region (R_{T}), wherein, on at least one tooth (T), on each of the inboard-side and outboard-side side surfaces (A_{T}) thereof, there are formed guide regions (A_{G}) for lateral guidance of the chain (6) substantially parallel to the axis of rotation (A_{P}),
**characterized**
**in that** at least one inboard-side guide region (A_{Gi}) has an at least regionally reduced thickness dimension (T_{T}), relative to a central plane (P_{M}) of the chain-guiding roller (16), in relation to at least one outboard-side guide region (A_{Go}) of the at least one tooth (T), such that a chain section (6ₜ) running substantially tangentially off the chain-guiding roller (16) can assume a greater skew angle (λᵢ) in an outboard direction (Sₒ) than in an inboard direction (Sᵢ).

2. Chain-guiding roller according to Claim 1,
**characterized**
**in that** at least one guide region (A_{Gi}, A_{Go}) comprises an elevated thickened portion which is arranged in the region of an inboard-side side surface (A_{T1i}) or of an outboard-side side surface (A_{T1o}) of the at least one tooth (T).

3. Chain-guiding roller according to Claim 1 or 2,
**characterized**
**in that** at least one guide region (A_{Gi}, A_{Go}) of the at least one tooth (T) at least regionally has a thickness (T_{T}) that decreases with increasing distance to the axis of rotation (A_{P}).

4. Chain-guiding roller according to any one of Claims 1 to 3,
**characterized**
**in that** at least one region of decreasing thickness (T_{T}) of the at least one guide region (A_{Gi}, A_{Go}) of the at least one tooth (T) is configured as a bevel surface (Cs) which defines a bevel plane (P_{C}) which is arranged so as to be tilted by an angle (α) relative to a chain-guiding roller central plane (P_{M}) along an axial direction (D_{A}) such that a radially inner delimiting edge (B_{B}) of the bevel surface (Cs) relative to a side surface (A_{T}) of the at least one tooth (T) is defined as a result of the tilting.

5. Chain-guiding roller according to Claim 4,
**characterized**
**in that** the at least one bevel plane (P_{C}) and thus the at least one bevel surface (Cs) of the at least one tooth (T) is pivoted by an angle (β) relative to the chain roller central plane (P_{M}) about a chain roller radial line (L_{R}, L'_{R}) that is assigned to the at least one tooth (T) in such a way that the radially inner delimiting edge (B_{B}) of the bevel surface (Cs) has a profile that rises in a radially outward direction along an operating direction of rotation (D_{W}) of the chain-guiding roller (16), and/or in such a way that the guide region (A_{Gi}, A_{Go}) has, at least in the region of the bevel surface (Cs), a thickness (T_{T}) that increases from the load flank (F_{L}) of the tooth (T) towards the non-load flank (F_{N}) thereof.

6. Chain-guiding roller according to any one of Claims 1 to 5,
**characterized**
**in that** a flank angle (γ_{L}) of the load flank (F_{L}) of the at least one tooth (T) is shallower than a flank angle (γ_{N}) of the non-load flank (F_{N}) of the at least one tooth (T).

7. Chain-guiding roller according to any one of Claims 1 to 6,
**characterized**
**in that** a region (A_{S}) around the tooth tip of the at least one tooth (T) has an inclination (ε) predominantly towards the non-load flank (F_{N}) of the tooth (T).

8. Chain-guiding roller according to any one of Claims 1 to 7,
**characterized**
**in that** the chain-guiding roller (16) has an even-numbered multiplicity of teeth (T) which are assigned, in alternating fashion in a circumferential direction, to in each case one first or one second tooth group, wherein the teeth of the first tooth group are narrow teeth (T_{N}), which are narrower than a chain inner link plate spacing, and wherein the second tooth group comprises at least one wide tooth (T_{W}), which is wider than a chain inner link plate spacing, such that the at least one wide tooth (T_{W}) can protrude fully only into the link plate intermediate space of an outer link plate chain link (OL) but not into the link plate intermediate space of an inner link plate chain link (IL).

9. Chain-guiding roller according to Claim 8,
**characterized**
**in that** at least one tooth (T_{N}) of the first tooth group has a reduced tooth height in a radial direction in relation to at least one tooth (T_{W}) of the second tooth group.

10. Chain-guiding roller according to any one of Claims 1 to 9,
**characterized**
**in that** one or both flank angles (γ_{L1}, γ_{N1}) of at least one tooth (T_{N}) of the first tooth group is shallower than the corresponding flank angle (γ_{L2}, γ_{N2}) of at least one tooth (T_{W}) of the second tooth group.

11. Rear bicycle gearshift mechanism,
comprising a base element (10), which is connectable to a bicycle rear-end structure frame (7), a gearshift element (12), which is movable relative to the base element (10) by means of a pivot arrangement (11), and a chain-guiding device (13), which is pivotably connected to the gearshift element (12) and which has an upper chain-guiding roller (16) and a lower chain-tensioning roller (15),
**characterized by**
an upper chain-guiding roller (16) according to any one of Claims 1 to 10.

12. Bicycle drivetrain,
comprising at least one front sprocket (3), a rear multi-pinion arrangement (5) and a rear gearshift mechanism (4) with an upper chain-guiding roller (16) and a lower chain-tensioning roller (15),
**characterized**
**in that** the rear gearshift mechanism (4) comprises an upper chain-guiding roller (16) according to any one of Claims 1 to 10.

13. Bicycle drivetrain according to Claim 12,
**characterized**
**in that** the multi-pinion arrangement (5) has at least one pinion (31) with an even-numbered multiplicity of teeth (T) which are assigned, in alternating fashion in a circumferential direction, to in each case one first or one second tooth group, wherein the teeth of the first tooth group are narrow teeth (T_{N}), which are narrower than a chain inner link plate spacing, and wherein the second tooth group comprises at least one wide tooth (T_{W}), which is wider than a chain inner link plate spacing, such that the at least one wide tooth (T_{W}) can protrude fully only into the link plate intermediate space of an outer link plate chain link (OL) but not into the link plate intermediate space of an inner link plate chain link (IL).

14. Bicycle drivetrain according to Claim 12 or 13,
**characterized**
**in that** the rear gearshift mechanism is a straight-pin gearshift mechanism (4) with a non-inclined or only slightly inclined gearshift parallelogram (11).

## Revendications

1. Rouleau de guidage de chaîne (16) pour une ligne d'entraînement de bicyclette (2) avec une chaîne (6), avec un agencement de pignons multiples (5) et avec un dérailleur arrière de bicyclette (4), le rouleau de guidage de chaîne (16) comprenant une zone de palier (R_{B}) pouvant tourner autour d'un axe de rotation (A_{P}), une zone dentée (R_{T}) avec des dents (T) réalisées sur celle-ci pour l'engrènement dans la chaîne (6), ainsi qu'une structure porteuse (Ss) reliant la zone de palier (R_{B}) et la zone dentée (R_{T}), des zones de guidage (A_{G}) étant réalisées sur au moins une dent (T) sur ses surfaces latérales (A_{T}) côté inboard et côté outboard pour le guidage latéral de la chaîne (6) essentiellement parallèlement à l'axe de rotation (A_{P}),
**caractérisé en ce**
**qu'**au moins une zone de guidage côté inboard (A_{Gi}) présente par rapport à au moins une zone de guidage côté outboard (A_{Go}) de l'au moins une dent (T) une dimension d'épaisseur (T_{T}) réduite au moins par zones par rapport à un plan médian (P_{M}) du rouleau de guidage de chaîne (16) de telle sorte qu'une section de chaîne (6ₜ) se déroulant essentiellement de manière tangentielle à partir du rouleau de guidage de chaîne (16) peut prendre un angle de déplacement oblique (λᵢ) plus important dans la direction outboard (Sₒ) que dans la direction inboard (Sᵢ).

2. Rouleau de guidage de chaîne selon la revendication 1,
**caractérisé en ce**
**qu'**au moins une zone de guidage (A_{Gi}, A_{Go}) comprend un épaississement en relief qui est agencé dans la zone d'une surface latérale côté inboard (A_{T1i}) ou d'une surface latérale côté outboard (A_{T1o}) de l'au moins une dent (T).

3. Rouleau de guidage de chaîne selon la revendication 1 ou 2,
**caractérisé en ce**
**qu'**au moins une zone de guidage (A_{Gi}, A_{Go}) de l'au moins une dent (T) présente au moins par zones une épaisseur (T_{T}) décroissante lorsque la distance à l'axe de rotation (A_{P}) augmente.

4. Rouleau de guidage de chaîne selon l'une quelconque des revendications 1 à 3,
**caractérisé en ce**
**qu'**au moins une zone d'épaisseur décroissante (T_{T}) de l'au moins une zone de guidage (A_{Gi}, A_{Go}) de l'au moins une dent (T) est réalisée sous la forme de surface de chanfrein (Cs), par laquelle un plan de chanfrein (P_{C}) est défini, qui est agencé basculé d'un angle (α) par rapport à un plan médian de rouleau de guidage de chaîne (P_{M}) le long d'une direction axiale (D_{A}) de telle sorte que, par le biais du basculement, un bord de délimitation radialement intérieur (B_{B}) de la surface de chanfrein (Cs) est défini par rapport à une surface latérale (A_{T}) de l'au moins une dent (T).

5. Rouleau de guidage de chaîne selon la revendication 4,
**caractérisé en ce que**
l'au moins un plan de chanfrein (P_{C}) et donc l'au moins une surface de chanfrein (Cs) de l'au moins une dent (T) est pivotée d'un angle (β) autour d'une ligne radiale de rouleau de chaîne (L_{R}, L'_{R}) associée à l'au moins une dent (T) par rapport au plan médian de rouleau de chaîne (P_{M}) de telle sorte que le bord de délimitation radialement intérieur (B_{B}) de la surface de chanfrein (Cs) obtient un tracé montant radialement vers l'extérieur le long d'une direction de rotation de fonctionnement (D_{W}) du rouleau de guidage de chaîne (16) et/ou de telle sorte que la zone de guidage (A_{Gi}, A_{Go}) présente, au moins dans la zone de la surface de chanfrein (Cs), une épaisseur (T_{T}) augmentant depuis le flanc de charge (F_{L}) de la dent (T) jusqu'à son flanc de non-charge (F_{N}).

6. Rouleau de guidage de chaîne selon l'une quelconque des revendications 1 à 5,
**caractérisé en ce**
**qu'**un angle de flanc (γ_{L}) du flanc de charge (F_{L}) de l'au moins une dent (T) est plus plat qu'un angle de flanc (γ_{N}) du flanc de non-charge (F_{N}) de l'au moins une dent (T) .

7. Rouleau de guidage de chaîne selon l'une quelconque des revendications 1 à 6,
**caractérisé en ce**
**qu'**une zone (A_{S}) autour de la pointe de dent de l'au moins une dent (T) présente une inclinaison (ε) principalement vers le flanc de non-charge (F_{N}) de la dent (T).

8. Rouleau de guidage de chaîne selon l'une quelconque des revendications 1 à 7,
**caractérisé en ce que**
le rouleau de guidage de chaîne (16) présente une pluralité de dents (T) en nombre pair associées de manière alternée dans la direction circonférentielle à un premier ou un deuxième groupe de dents respectivement, les dents du premier groupe de dents étant des dents étroites (T_{N}), qui sont plus étroites qu'une distance entre les maillons intérieurs de la chaîne, et le deuxième groupe de dents comprenant au moins une dent large (T_{W}) qui est plus large qu'une distance entre les maillons intérieurs de la chaîne, de telle sorte que l'au moins une dent large (T_{W}) ne peut s'enfoncer complètement que dans l'espace entre les maillons d'un maillon extérieur de la chaîne (OL), mais pas dans l'espace entre les maillons d'un maillon intérieur de la chaîne (IL).

9. Rouleau de guidage de chaîne selon la revendication 8,
**caractérisé en ce**
**qu'**au moins une dent (T_{N}) du premier groupe de dents présente une hauteur de dent réduite dans la direction radiale par rapport à au moins une dent (T_{W}) du deuxième groupe de dents.

10. Rouleau de guidage de chaîne selon l'une quelconque des revendications 1 à 9,
**caractérisé en ce**
**qu'**un ou les deux angles de flanc (γ_{L1}, γ_{N1}) d'au moins une dent (T_{N}) du premier groupe de dents est plus plat que l'angle de flanc correspondant (γ_{L2}, γ_{N2}) d'au moins une dent (T_{W}) du deuxième groupe de dents.

11. Dérailleur arrière de bicyclette,
comprenant un élément de base (10) pouvant être relié à un cadre arrière de bicyclette (7), un élément de changement de vitesse (12) pouvant être déplacé par rapport à l'élément de base (10) au moyen d'un agencement pivotant (11), ainsi qu'un dispositif de guidage de chaîne (13) relié de manière pivotante à l'élément de changement de vitesse (12), avec un rouleau de guidage de chaîne supérieur (16) et un rouleau tendeur de chaîne inférieur (15),
**caractérisé par**
un rouleau de guidage de chaîne supérieur (16) selon l'une quelconque des revendications 1 à 10.

12. Ligne d'entraînement de bicyclette,
comprenant au moins une roue à chaîne avant (3), un agencement de pignons multiples arrière (5) ainsi qu'un dérailleur arrière (4) avec un rouleau de guidage de chaîne supérieur (16) et un rouleau tendeur de chaîne inférieur (15),
**caractérisée en ce que**
le dérailleur arrière (4) comprend un rouleau de guidage de chaîne supérieur (16) selon l'une quelconque des revendications 1 à 10.

13. Ligne d'entraînement de bicyclette selon la revendication 12,
**caractérisée en ce que**
l'agencement de pignons multiples (5) présente au moins un pignon (31) avec une pluralité de dents (T) en nombre pair associées de manière alternée dans la direction circonférentielle à un premier ou un deuxième groupe de dents respectivement, les dents du premier groupe de dents étant des dents étroites (T_{N}), qui sont plus étroites qu'une distance entre les maillons intérieurs de la chaîne, et le deuxième groupe de dents comprenant au moins une dent large (T_{W}) qui est plus large qu'une distance entre les maillons intérieurs de la chaîne, de sorte que l'au moins une dent large (T_{W}) ne peut s'enfoncer complètement que dans l'espace entre les maillons d'un maillon extérieur de la chaîne (OL), mais pas dans l'espace entre les maillons d'un maillon intérieur de la chaîne(IL).

14. Ligne d'entraînement de bicyclette selon la revendication 12 ou 13,
**caractérisée en ce que**
le dérailleur arrière est un dérailleur à pignons droits (4) avec un parallélogramme de changement de vitesse (11) non incliné ou seulement légèrement incliné.
